# EUROPEAN PATENT SPECIFICATION

(11) **EP 4 177 544 B1**
(45) Date of publication and mention of the grant of the patent: **18.06.2025**
(21) Application number: 22190364.4
(22) Date of filing: 15.08.2022
(51) Int. Cl.: F25B 41/35, F16K 31/04, H02K 37/00

(54) **ELECTRIC-OPERATED VALVE, METHOD OF CONTROLLING THE SAME, AND METHOD OF MANUFACTURING THE SAME**
ELEKTRISCH BETÄTIGTES VENTIL, VERFAHREN ZU SEINER STEUERUNG UND VERFAHREN ZU SEINER HERSTELLUNG
SOUPAPE À COMMANDE ÉLECTRIQUE, SON PROCÉDÉ DE COMMANDE, ET SON PROCÉDÉ DE FABRICATION

(30) Priority: 23.08.2021 JP 2021135513; 25.05.2022 JP 2022085342
(43) Date of publication of application: 10.05.2023
(73) Proprietor: Fujikoki Corporation, Tokyo 158-0082 (JP)
(72) Inventor: YAZAWA, Masashi, Tokyo, 1580082 (JP); MANO, Hideo, Tokyo, 1580082 (JP)
(74) Representative: Ter Meer Steinmeister & Partner

(56) References cited:
- EP-A1- 3 026 373
- WO-A1-2019/130928
- JP-A- 2019 152 337

## Description

### BACKGROUND OF THE INVENTION

### 1. Field of the Invention

The present invention relates to an electric-operated valve, a method of controlling the same, and a method of manufacturing the same.

### 2. Description of the Related Art

Japanese Patent No. 5218694 discloses an electronic expansion valve, which is an example of known electric-operated valves. The electronic expansion valve is installed in an air conditioner. The electronic expansion valve includes a valve body, a valve member, and a stepping motor for moving the valve member. The valve body includes a valve port through which fluid flows. The valve member forms a variable throttle with the valve port. The stepping motor includes a rotor and a stator.

The air conditioner controls the electronic expansion valve based on the position of the rotor related to a valve opening point. The valve opening point is the number of pulses (a pulse number) input to the stepping motor to rotate the rotor from a position (a rotation limit position) where the rotation is limited by a stopper to a position (a valve opening position) at which the flow rate of the fluid in the valve port is at a predetermined set value. The valve opening point can vary depending on the component accuracy or assembly accuracy of the electric-operated valve. For this reason, the electronic expansion valve disclosed in Japanese Patent No. 5218694 is provided with information related to the valve opening point obtained in the manufacturing process. The air conditioner can accurately control the flow rate of the electronic expansion valve using this information.

The electronic expansion valve disclosed in Japanese Patent No. 5218694 measures the valve opening point on the basis of the flow rate of the fluid at the valve port, so that the measurement of the valve opening point is complicated. For this reason, a simple method for obtaining the position of the rotor as a reference for flow-rate control of the electric-operated valve has been desired.

JP 2019 152337 A discloses an electric valve, wherein a valve stem is rotated in one direction and is moved downward by an elevation driving mechanism, which moves a valve member downward and brings the valve member into contact with a valve seat. Then, the valve member is further moved downward, withstanding the pushing force of a valve pushing spring, to a control origin position defined by a valve opening direction stopper mechanism that includes a movable stopper and a fixed stopper.

In assembling the electric valve, the valve stem is rotated in one direction, and the valve member is moved downward to an assembling reference position defined by an assembling stopper mechanism that includes a movable stopper and a fixed stopper, the assembling reference position being lower than the control origin position by a predetermined distance. Next, the valve stem is rotated in the other direction, and the valve member is moved upward by the predetermined distance, then the valve opening direction stopper mechanism is assembled.
In the method for assembling the electric valve, the valve stem is reversed when the valve member reaches the assembling reference position.

### SUMMARY OF THE INVENTION

Accordingly, it is an object of the present invention to provide an electric-operated valve in which the position of the rotor as a reference for flow-rate control can easily be obtained, a method of controlling the same, and a method of manufacturing the same.

The inventors eagerly examined the relationship between the valve opening point and the position of the rotor using a plurality of electric-operated valves. As a result, the inventors found that the numbers of pulses (pulse numbers) for rotating the individual rotors from a position where the valve members are in contact with the valve seats (a valve closing position) to a valve opening position do not vary in a plurality of electric-operated valves, and the pulse numbers are common among the plurality of electric-operated valves. The inventors also found that the numbers of pulses (pulse numbers) for rotating the individual rotors from a rotation limit position to the valve closing position vary among the plurality of electric-operated valves, and the pulse numbers are unique values in the individual electric-operated valves. From the findings, the inventors found the idea that the position of the rotor as a reference for flow-rate control can be obtained based on the valve closing position of the electric-operated valve. The present invention has been achieved based on the idea.

To achieve the above object, an electric-operated valve and a method of controlling such an electric-operated valve are provided according to the independent claims.

To achieve the above object, an electric-operated valve according to an aspect of the invention includes a valve body including a valve seat, a rotor rotatable with respect to the valve body, a stator constituting a stepping motor together with the rotor, a valve member that faces the valve seat and that is pushed toward the valve seat via a coil spring when the rotor rotates in a closing direction, a stopper that, when the rotor is at a rotation limit position where the rotor is further rotated in the closing direction from a valve closing position where the valve member is in contact with the valve seat, limits rotation of the rotor in the closing direction, and a control unit. The control unit (1) inputs a pulse to the stepping motor to rotate the rotor in the closing direction with a first torque, (2) upon detecting step-out of the stepping motor when rotating the rotor with the first torque (hereinafter referred to as "first step-out detection"), inputs the pulse to the stepping motor to rotate the rotor in the closing direction with a second torque, and (3) upon detecting step-out of the stepping motor when rotating the rotor with the second torque (hereinafter referred to as "second step-out detection"), obtains the number of pulses (a pulse number) input between the first step-out detection and the second step-out detection, wherein the first torque is a torque of a magnitude incapable of rotating the rotor in the closing direction to the rotation limit position, with the valve member in contact with the valve seat, and wherein the second torque is a torque of a magnitude capable of rotating the rotor in the closing direction to the rotation limit position while compressing the coil spring, with the valve member in contact with the valve seat.

To achieve the above object, a method of controlling an electric-operated valve according to another aspect of the invention is provided. The electric-operated valve includes a valve body including a valve seat, a rotor rotatable with respect to the valve body, a stator constituting a stepping motor together with the rotor, a valve member that faces the valve seat and that is pushed toward the valve seat via a coil spring when the rotor rotates in a closing direction, and a stopper that, when the rotor is at a rotation limit position where the rotor is further rotated in the closing direction from a valve closing position where the valve member is in contact with the valve seat, limits rotation of the rotor in the closing direction. The method includes:
(1) inputting a pulse to the stepping motor to rotate the rotor in the closing direction with a first torque;
(2) upon detecting step-out of the stepping motor when rotating the rotor with the first torque (hereinafter referred to as "first step-out detection"), inputting the pulse to the stepping motor to rotate the rotor in the closing direction with a second torque; and
(3) upon detecting step-out of the stepping motor when rotating the rotor with the second torque (hereinafter referred to as "second step-out detection"), obtaining the number of pulses (a pulse number) input between the first step-out detection and the second step-out detection, wherein the first torque is a torque of a magnitude incapable of rotating the rotor in the closing direction to the rotation limit position, with the valve member in contact with the valve seat, and wherein the second torque is a torque of a magnitude capable of rotating the rotor in the closing direction to the rotation limit position while compressing the coil spring, with the valve member in contact with the valve seat.

In the aspect of the invention, preferably, the method further includes (4) calculating information on the pulse number using the pulse number, wherein the information includes a pulse number that is input to the stepping motor to rotate the rotor from the rotation limit position to a valve opening position at which a fluid flow rate in a valve port enclosed by the valve seat is a set value.

According to an embodiment of the invention, a valve member is disposed so as to face a valve seat and is pushed toward the valve seat via a coil spring when a rotor rotates in a closing direction. When the rotor is at a rotation limit position where the rotor is further rotated in the closing direction from a valve closing position where the valve member is in contact with the valve seat, a stopper limits rotation of the rotor in the closing direction. (1) A pulse is input to the stepping motor to rotate the rotor in the closing direction with a first torque. (2) When step-out of the stepping motor is detected while the rotor is rotated with the first torque (hereinafter referred to as "first step-out detection"), the pulse is input to the stepping motor to rotate the rotor in the closing direction with a second torque. (3) When step-out of the stepping motor is detected while the rotor is rotated with the second torque (hereinafter referred to as "second step-out detection"), a pulse number input between the first step-out detection and the second step-out detection is obtained. The first torque is a torque of a magnitude incapable of rotating the rotor in the closing direction to the rotation limit position, with the valve member in contact with the valve seat. The second torque is a torque of a magnitude capable of rotating the rotor in the closing direction to the rotation limit position while compressing a coil spring, with the valve member in contact with the valve seat. Thus, the first step-out corresponds to the valve closing position, the second step-out corresponds to the rotation limit position, and the pulse number input between the first step-out detection and the second step-out detection is a pulse number for rotating the rotor from the rotation limit position to the valve closing position. In other words, this pulse number relates to the valve closing position of the rotor which can be a reference for flow control. This allows easily obtaining the position of the rotor in the electric-operated valve as a reference for flow control without measuring the flow rate of the fluid.

### BRIEF DESCRIPTION OF THE DRAWINGS

Fig. 1 is a front view of an electric-operated valve according to an embodiment of the present invention;
Fig. 2 is a front view of a valve body assembly of the electric-operated valve in Fig. 1;
Fig. 3 is a sectional view of the valve body assembly in Fig. 2;
Fig. 4A is a perspective view of a valve stem holder of the valve body assembly in Fig. 2;
Fig. 4B is a plan view of the valve stem holder;
Fig. 5 is a plan view of the valve stem holder and the rotor of the valve body assembly illustrated in Fig. 2;
Fig. 6 is a side view of a guide bush of the valve body assembly in Fig. 2;
Fig. 7A is a perspective view of a stopper member of the valve body assembly in Fig. 2;
Fig. 7B is a plan view of the stopper member;
Fig. 8 is a sectional view of a stator unit of the electric-operated valve in Fig. 1;
Fig. 9A is a perspective view of a positioning member of the stator unit in Fig. 8;
Fig. 9B is a side view of the positioning member;
Fig. 10 is a diagram schematically illustrating the positional relationship between the magnetic poles of the rotor and the pole teeth of the stator and a pulse input to the stepping motor in operating the electric-operated valve in Fig. 1 (when pulse P[0] is input);
Fig. 11 is a diagram schematically illustrating the positional relationship between the magnetic poles of the rotor and the pole teeth of the stator and a pulse input to the stepping motor in operating the electric-operated valve in Fig. 1 (when pulse P[1] is input);
Fig. 12 is a diagram schematically illustrating the positional relationship between the magnetic poles of the rotor and the pole teeth of the stator and a pulse input to the stepping motor in operating the electric-operated valve in Fig. 1 (when pulse P[2] is input);
Fig. 13 is a diagram schematically illustrating the positional relationship between the magnetic poles of the rotor and the pole teeth of the stator and a pulse input to the stepping motor in operating the electric-operated valve in Fig. 1 (when pulse P[3] is input);
Fig. 14 is a diagram schematically illustrating the positional relationship between the magnetic poles of the rotor and the pole teeth of the stator and a pulse input to the stepping motor in operating the electric-operated valve in Fig. 1 (when pulse P[4] is input);
Fig. 15 is a diagram schematically illustrating the positional relationship between the magnetic poles of the rotor and the pole teeth of the stator and a pulse input to the stepping motor in operating the electric-operated valve in Fig. 1 (when pulse P[5] is input);
Fig. 16 is a diagram schematically illustrating the positional relationship between the magnetic poles of the rotor and the pole teeth of the stator and a pulse input to the stepping motor in operating the electric-operated valve in Fig. 1 (when pulse P[6] is input);
Fig. 17 is a diagram schematically illustrating the positional relationship between the magnetic poles of the rotor and the pole teeth of the stator and a pulse input to the stepping motor in operating the electric-operated valve in Fig. 1 (when pulse P[7] is input);
Fig. 18 is a diagram schematically illustrating the positional relationship between the magnetic poles of the rotor and the pole teeth of the stator and a pulse input to the stepping motor in operating the electric-operated valve in Fig. 1 (when the rotor is at a valve closing position);
Fig. 19 is a diagram schematically illustrating the positional relationship between the magnetic poles of the rotor and the pole teeth of the stator and a pulse input to the stepping motor in operating the electric-operated valve in Fig. 1 (when the rotor is at a valve opening position);
Figs. 20A to 20D are diagrams illustrating an example of the operation of the electric-operated valve in Fig. 1 in a manufacturing process;
Figs. 21A and 20B are diagrams illustrating an example of the operation of the electric-operated valve in Fig. 1 in the manufacturing process;
Fig. 22 is a schematic configuration diagram of an air conditioner including the electric-operated valve in Fig. 1; and
Figs. 23A and 23B are diagrams illustrating the positional relationship between the internal thread of the valve stem holder of the valve body assembly in Fig. 2 and the external thread of the guide bush.

### DESCRIPTION OF THE PREFERRED EMBODIMENTS

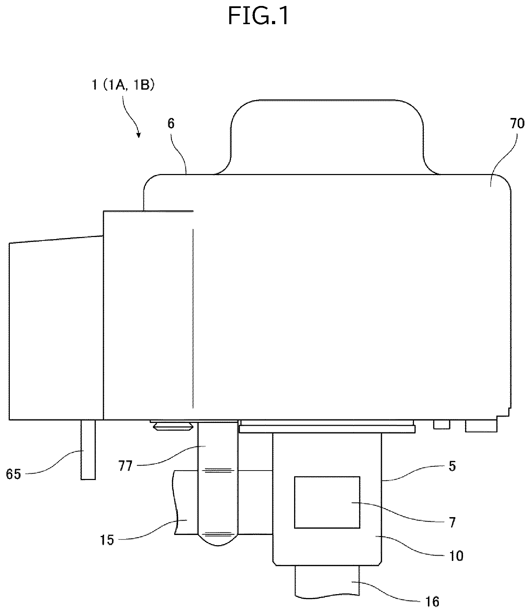

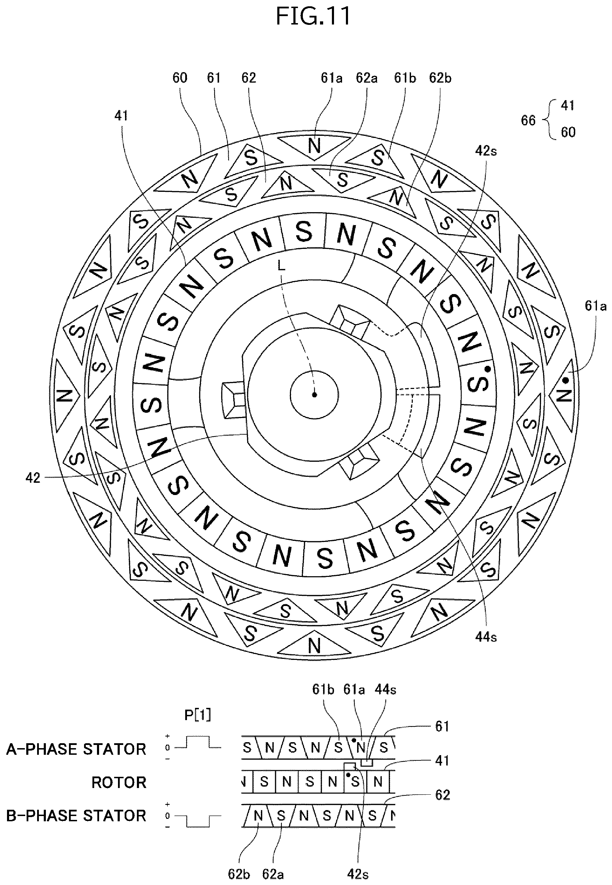

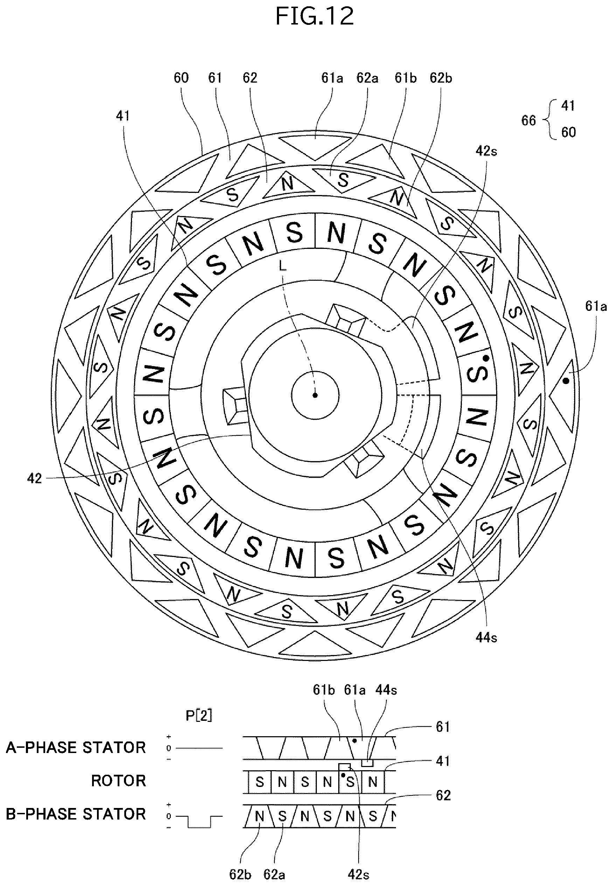

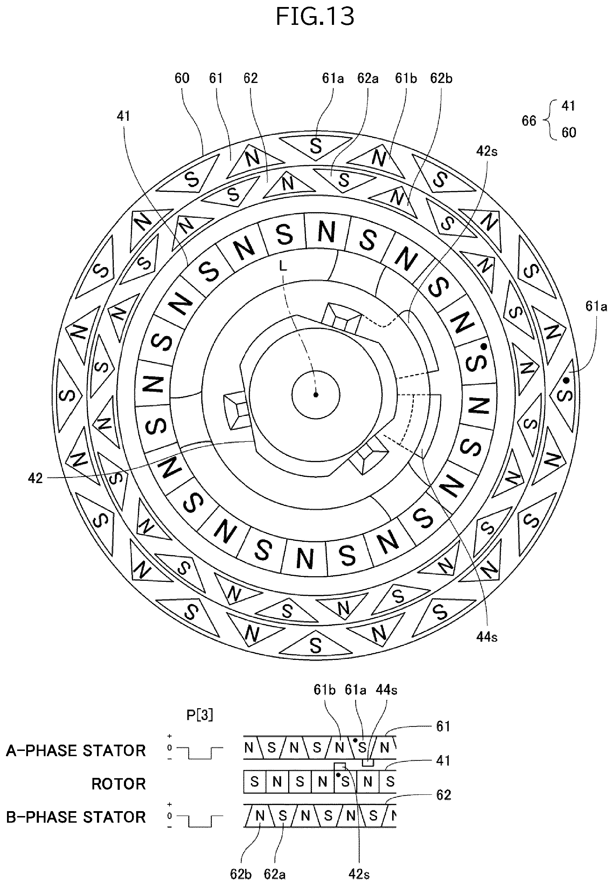

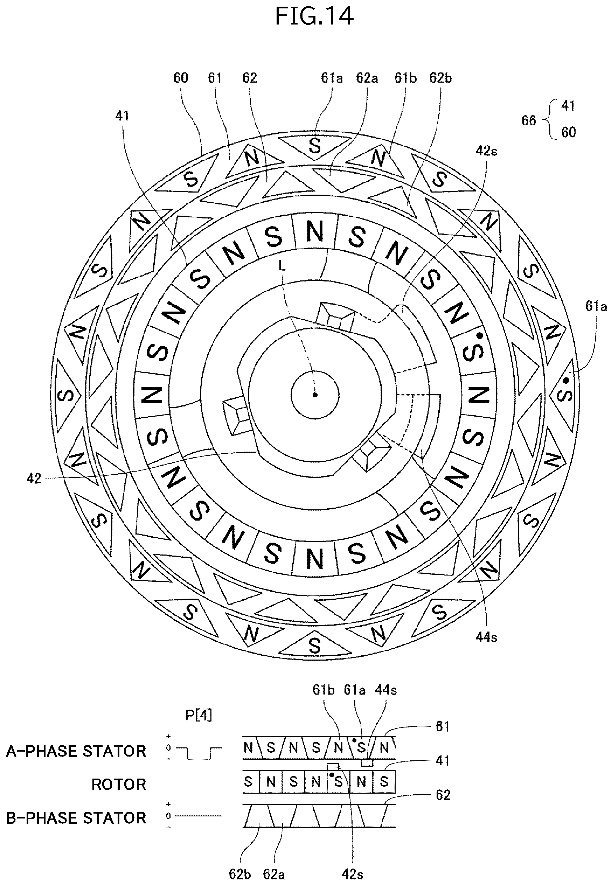

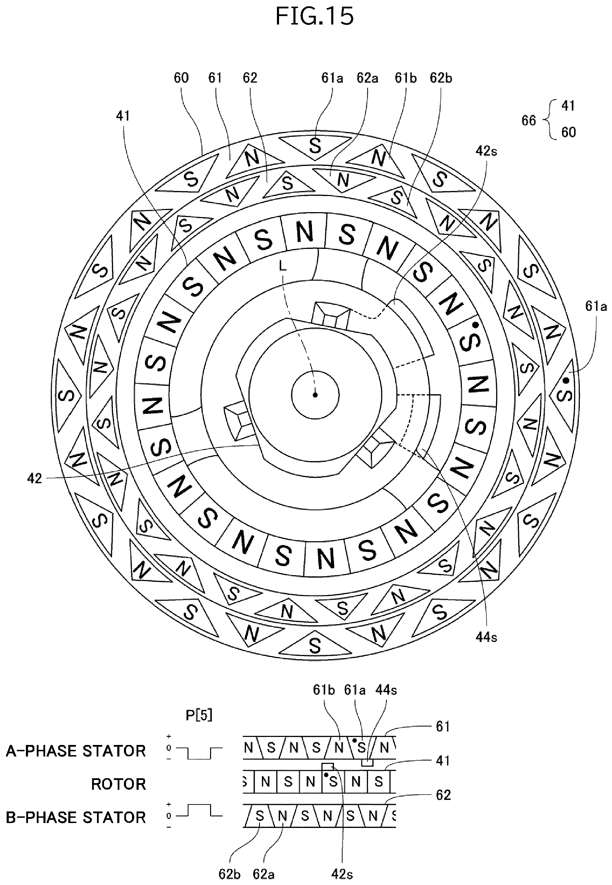

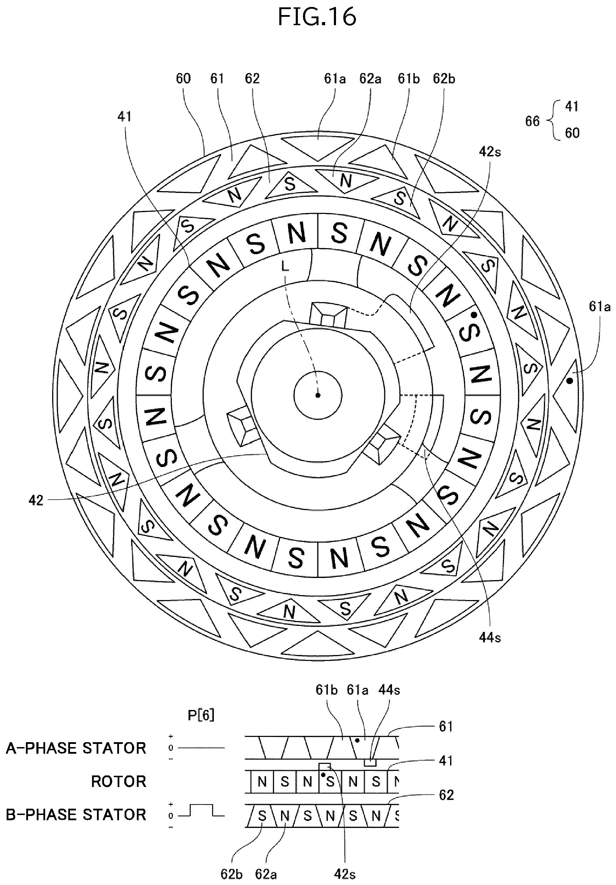

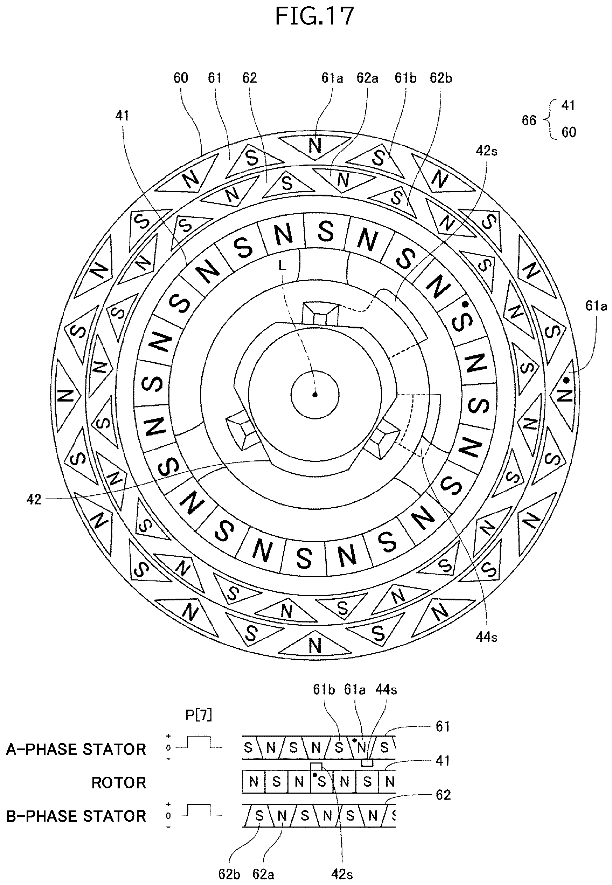

The configurations of electric-operated valves according to embodiments of the present invention will be described hereinbelow with reference to Figs. 1 to 23B. An electric-operated valve 1 according to an embodiment is used as a flow control valve for adjusting the flow rate of refrigerant (fluid), for example, in the refrigerating cycle of an air conditioner.

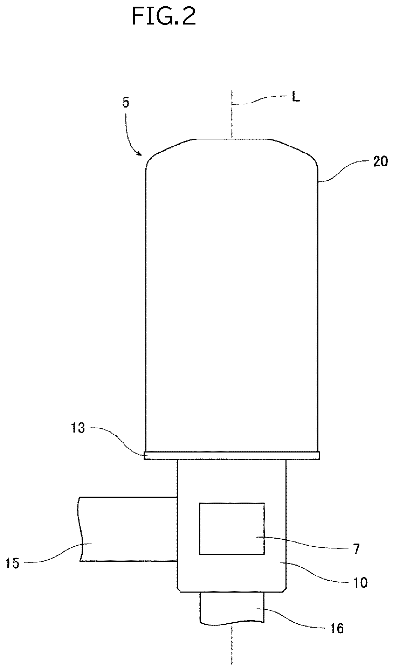

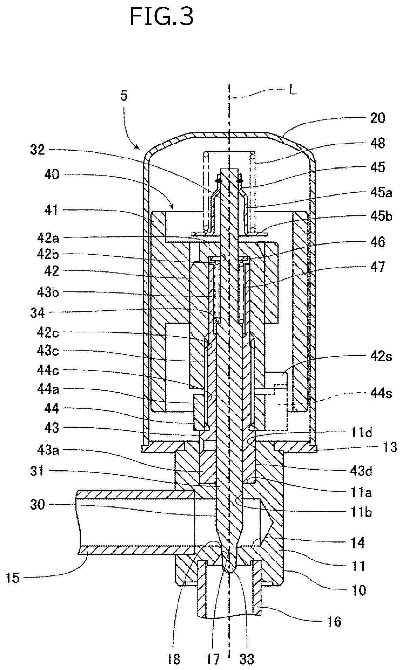

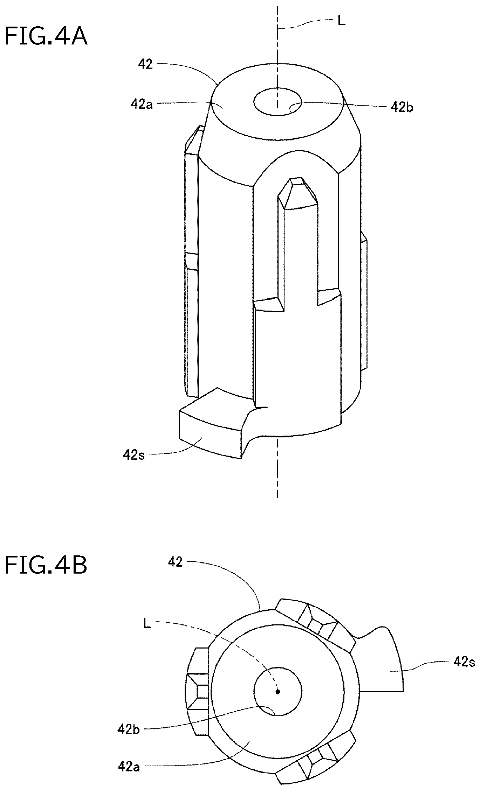

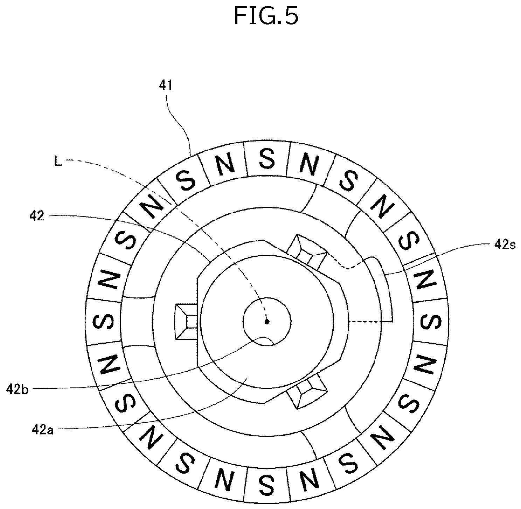

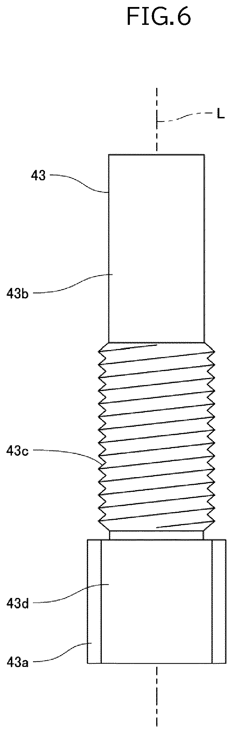

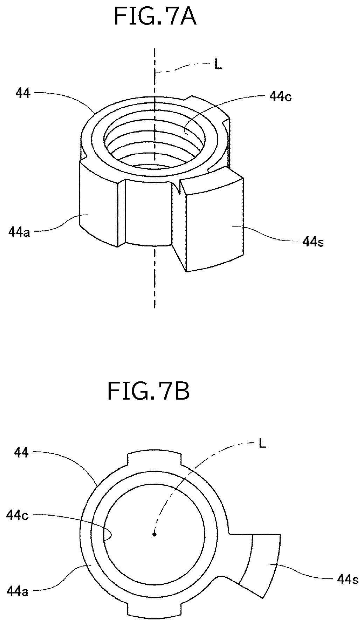

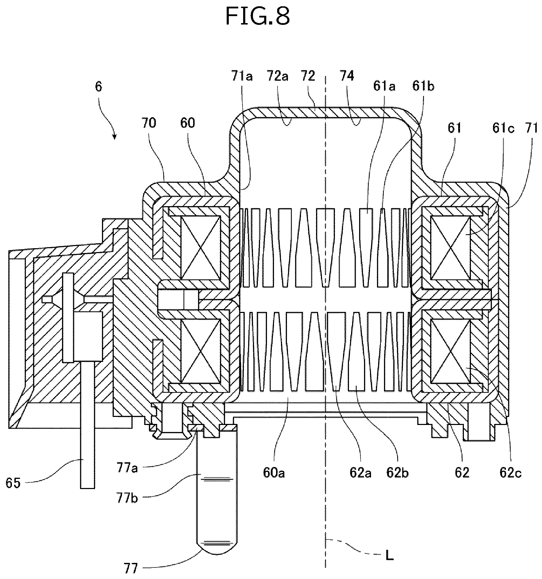

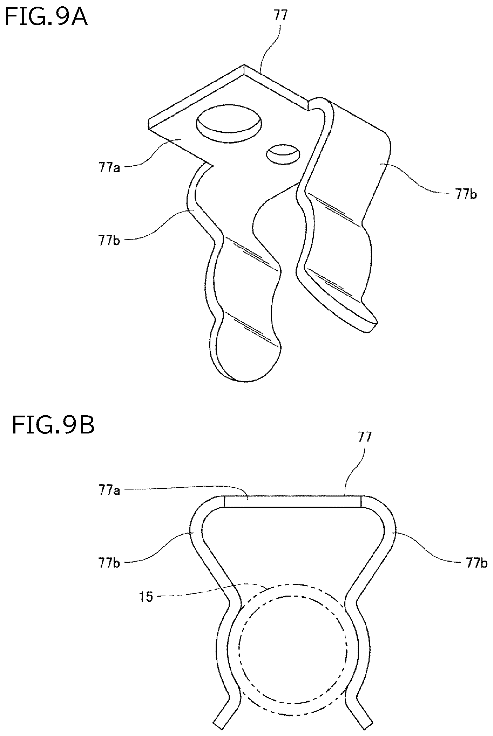

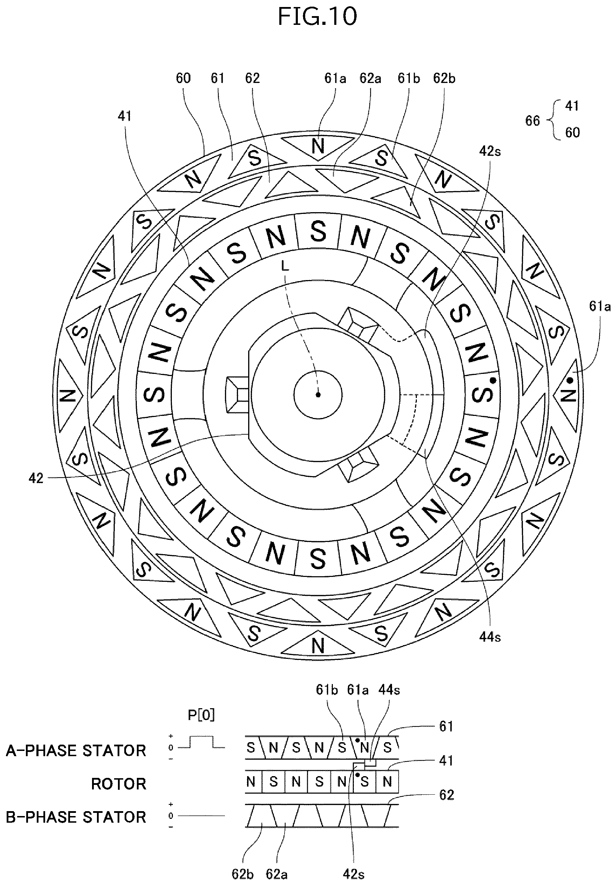

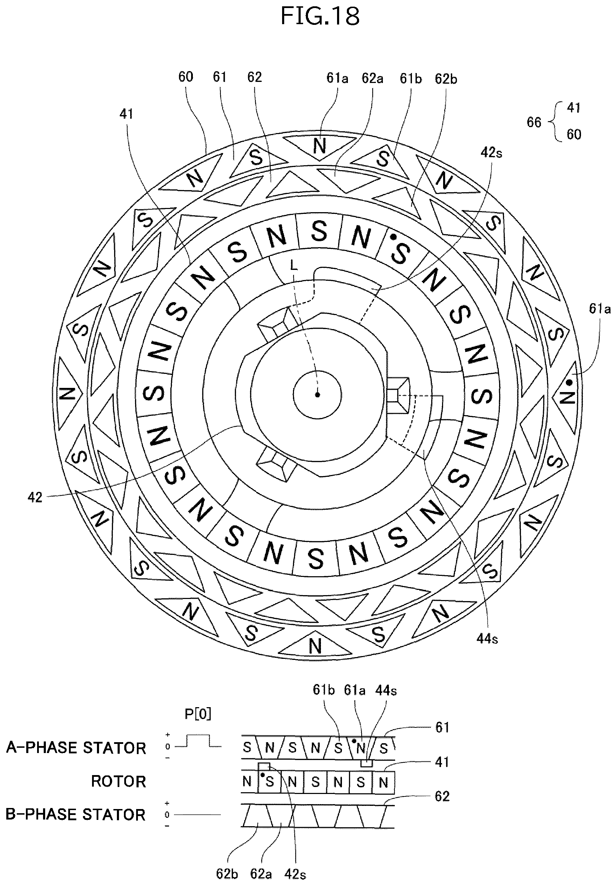

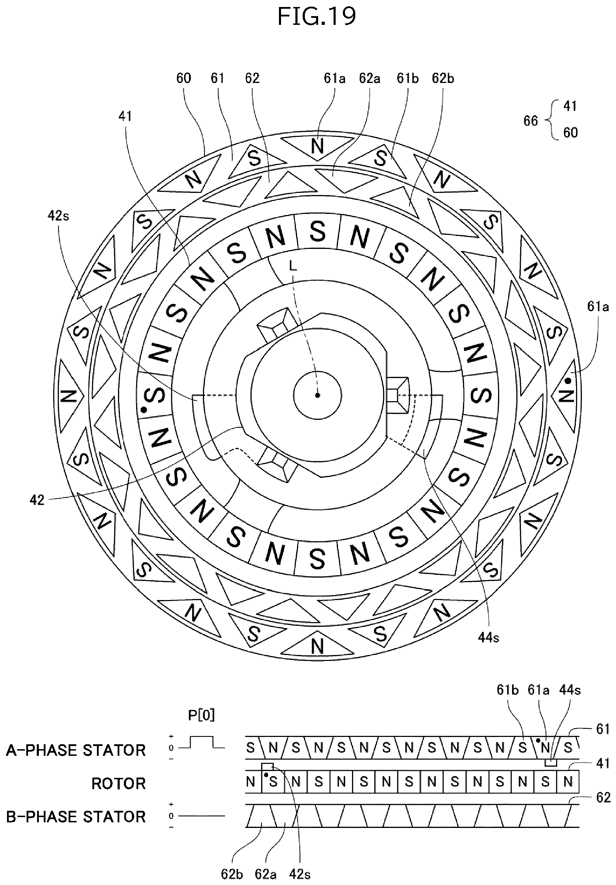

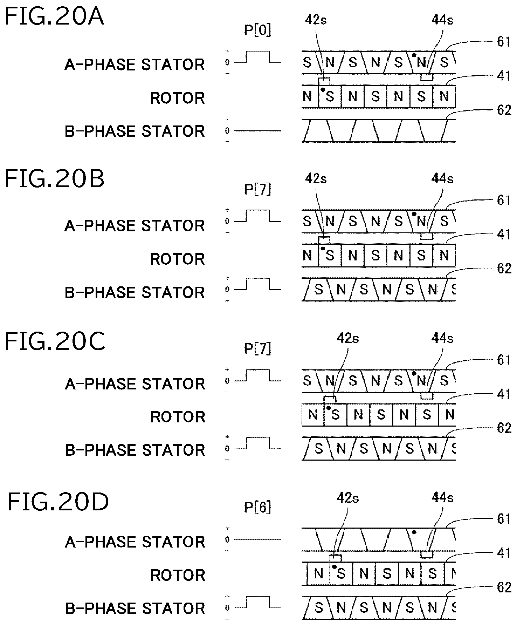

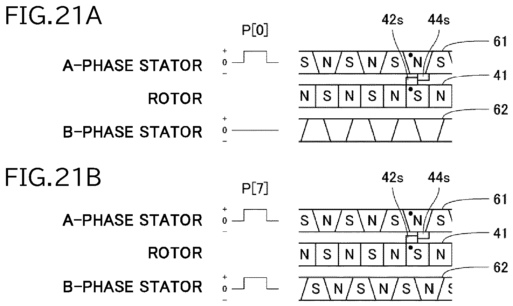

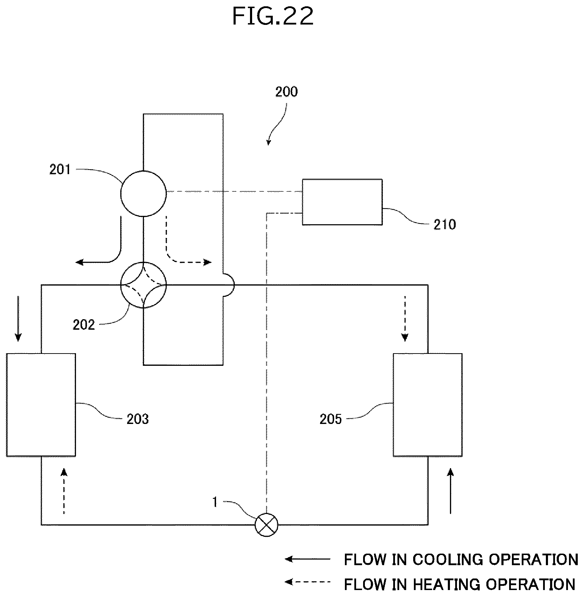

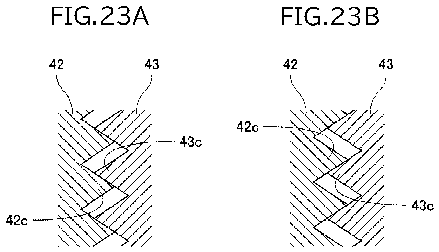

Fig. 1 is a front view of the electric-operated valve 1 according to an embodiment of the present invention. Fig. 2 is a front view of the valve body assembly of the electric-operated valve in Fig. 1. Fig. 3 is a sectional view of the valve body assembly in Fig. 2. Fig. 3 illustrates a state in which the rotor is at a rotation limit position. Figs. 4A and 4B are diagrams illustrating a valve stem holder provided in the valve body assembly in Fig. 2. Fig. 4A is a perspective view of the valve stem holder, and Fig. 4B is a plan view of the valve stem holder. Fig. 5 is a plan view of the valve stem holder and the rotor of the valve body assembly illustrated in Fig. 2. Fig. 5 schematically illustrates the magnetic poles of the rotor. Fig. 6 is a side view of a guide bush provided in the valve body assembly in Fig. 2. Figs. 7A and 7B are diagrams illustrating a stopper member provided in the valve body assembly in Fig. 2. Fig. 7A is a perspective view of the stopper member, and Fig. 7B is a plan view of the stopper member. Fig. 8 is a sectional view of a stator unit provided in the electric-operated valve in Fig. 1. Figs. 9A and 9B are diagrams illustrating a positioning member provided in the stator unit of Fig. 8. Fig. 9A is a perspective view of the positioning member, and Fig. 9B is a side view of the positioning member. Figs. 10 to 19 are diagrams schematically illustrating the positional relationship between the magnetic poles of the rotor and the pole teeth of the stator and the pulses input to the stepping motor in operating the electric-operated valve in Fig. 1. Figs. 10 to 17 illustrate states when pulses P[0] to P[7] are respectively input. Fig. 10 illustrates a state in which the rotor is at a rotation limit position. Fig. 18 illustrate a state in which the rotor is at a valve closing position. Fig. 19 illustrates a state in which the rotor is at a valve opening position. The upper diagrams in Figs. 10 to 19 illustrate the positional relationship between the magnetic poles of the rotor and the pole teeth of the stator. The lower diagrams in Figs. 10 to 19 illustrate the pulses input to the stepping motor and the positional relationship between the magnetic poles of the rotor and the pole teeth of the stator. Figs. 20A to 20D and Figs. 21A and 21B are diagrams illustrating an example of the operation of the electric-operated valve in Fig. 1 in the manufacturing process. Figs. 20A to 20D and Figs. 21A and 21B illustrate the pulses input to the stepping motor and the positional relationship between the magnetic poles of the rotor and the pole teeth of the stator. Fig. 20A corresponds to a state in which the rotor is at the valve closing position. Fig. 20B corresponds to a state in which the stepping motor is out of step when the rotor is at the valve closing position. Fig. 20C corresponds to a state in which the stepping motor has returned from the step-out state. Fig. 20D corresponds to a state in which the rotor has rotated from the state in Fig. 20C by one pulse. Fig. 21A corresponds to a state in which the rotor is at a rotation limit position. Fig. 21B corresponds to a state in which the stepping motor is out of step when the rotor is at the rotation limit position. Fig. 22 is a schematic configuration diagram of an air conditioner including the electric-operated valve in Fig. 1. Figs. 23A and 23B are diagrams illustrating the positional relationship between the internal thread of the valve stem holder and the external thread of the guide bush of the valve body assembly in Fig. 2. Fig. 23A is a sectional view illustrating a state in which the upward-facing surface of the internal thread of the valve stem holder and the downward-facing surface of the external thread of the guide bush are in contact with each other. Fig. 23B is a sectional view illustrating a state in which the downward-facing surface of the internal thread of the valve stem holder and the upward-facing surface of the external thread of the guide bush are in contact with each other.

As illustrated in Fig. 1, the electric-operated valve 1 includes a valve body assembly 5, a stator unit 6, and a label 7.

As illustrated in Figs. 2 and 3, the valve body assembly 5 includes a valve body 10, a can 20, a valve member 30, and a driving section 40.

The valve body 10 is made of metal, such as an aluminum alloy. The valve body 10 includes a body member 11 and a connection member 13. The body member 11 has a columnar shape. The body member 11 includes a valve chamber 14. A first conduit 15 is bonded to the outer circumferential surface of the body member 11. A second conduit 16 is bonded to the lower end face of the body member 11. The first conduit 15 is disposed in a direction (the lateral direction in Fig. 3) perpendicular to an axis L and is connected to the valve chamber 14. The second conduit 16 is disposed along the axis L and is connected to the valve chamber 14 via a valve port 17. The valve port 17 is enclosed by a valve seat 18, which has an annular shape, in the valve chamber 14. A fitting hole 11a is formed in a circular shape at the upper end face of the body member 11. The inner circumferential surface of the fitting hole 11a has a planar surface 11d facing the left in Fig. 3. A through hole 11b communicating with the valve chamber 14 is formed at the bottom of the fitting hole 11a. The connection member 13 has an annular plate-like shape. The inner circumferential edge of the connection member 13 is bonded to the upper end of the body member 11.

The can 20 is made of metal, such as stainless steel. The can 20 has a cylindrical shape that is open at the lower end and is closed at the upper end. The lower end of the can 20 is bonded to the outer peripheral edge of the connection member 13.

The valve member 30 includes a first stem portion 31, a second stem portion 32, and a valve portion 33. The first stem portion 31 has a columnar shape. The second stem portion 32 has a columnar shape. The diameter of the second stem portion 32 is smaller than the diameter of the first stem portion 31. The second stem portion 32 is coaxially connected to the upper end of the first stem portion 31. A step portion 34 is formed between the first stem portion 31 and the second stem portion 32. The step portion 34 is an annular plane facing upward. The valve portion 33 has a substantially conical shape that decreases in diameter from above to bottom. The valve portion 33 is coaxially connected to the lower end of the first stem portion 31. The tip end of the valve portion 33 is disposed in the valve port 17. A variable throttle is formed between the valve portion 33 and the valve port 17. The valve portion 33 faces the valve seat 18 and is in contact with the valve seat 18 in a valve-closing state.

The driving section 40 moves the valve member 30 in the vertical direction (in the direction of the axis L). The valve port 17 is opened and closed by the movement of the valve member 30. The driving section 40 includes a rotor 41, a valve stem holder 42, a guide bush 43, a stopper member 44, and a fixed member 45.

The rotor 41 has a cylindrical shape. The outside diameter of the rotor 41 is slightly smaller than the inside diameter of the can 20. The rotor 41 is disposed inside the can 20 so as to be rotatable with respect to the valve body 10. A plurality of north (N) poles and a plurality of south (S) poles are formed on the outer circumferential surface of the rotor 41. The N poles and the S poles extend in the vertical direction. The N poles and the S poles are alternately disposed in the circumferential direction at regular angular intervals. In this embodiment, the rotor 41 includes 12 N poles and 12 S poles. The angle between N and S poles adjacent to each other is 15 degrees.

Figs. 4A and 4B illustrate the valve stem holder 42. The valve stem holder 42 has a cylindrical shape that is open at the lower end and is closed at the upper end. As illustrated in Fig. 5, the valve stem holder 42 is fitted in the rotor 41. The valve stem holder 42 rotates with the rotor 41. The valve stem holder 42 includes a movable stopper 42s at the lower end. The movable stopper 42s is a protrusion protruding from the outer circumferential surface of the valve stem holder 42 outward in the radial direction. The second stem portion 32 of the valve member 30 is disposed in a stem hole 42b formed at an upper wall portion 42a of the valve stem holder 42 so as to be movable in the direction of the axis L. A washer 46 is disposed on the lower surface of the upper wall portion 42a of the valve stem holder 42. A valve closing spring 47 is disposed between the washer 46 and the step portion 34 of the valve member 30. The valve closing spring 47 is a coil spring, which pushes the valve member 30 toward the valve seat 18. The inner circumferential surface of the valve stem holder 42 has an internal thread 42c.

Fig. 6 illustrates the guide bush 43. The guide bush 43 includes a base portion 43a and a support portion 43b. The base portion 43a has a cylindrical shape. The support portion 43b has a cylindrical shape. The outer circumferential surface of the base portion 43a has a planar surface 43d. The base portion 43a is press-fitted in the fitting hole 11a of the body member 11, so that the planar surface 43d comes into contact with the planar surface 11d of the fitting hole 11a. This causes the axis of the body member 11 and the axis of the guide bush 43 to align on the axis L and the guide bush 43 to be correctly positioned to the body member 11 about the axis L. The outside diameter of the support portion 43b is smaller than the outside diameter of the base portion 43a. The inside diameter of the support portion 43b is equal to the inside diameter of the base portion 43a. The support portion 43b is coaxially connected to the upper end of the base portion 43a. The outer circumferential surface of the support portion 43b has an external thread 43c. The external thread 43c is screwed in the internal thread 42c of the valve stem holder 42. The first stem portion 31 of the valve member 30 is disposed in the guide bush 43. The guide bush 43 supports the valve member 30 movably in the direction of the axis L.

Figs. 7A and 7B illustrate the stopper member 44. The stopper member 44 includes a stopper body 44a. The stopper body 44a has a cylindrical shape. The inner circumferential surface of the stopper body 44a has an internal thread 44c. The stopper body 44a includes a fixed stopper 44s. The fixed stopper 44s is a protrusion protruding from the outer circumferential surface of the stopper body 44a outward in the radial direction. The stopper member 44 is fixed to the guide bush 43 by screwing the internal thread 44c and the external thread 43c until the stopper body 44a comes into contact with the base portion 43a of the guide bush 43.

The fixed member 45 includes a fixed portion 45a and a flange portion 45b. The fixed portion 45a has a stepped cylindrical shape. The second stem portion 32 of the valve member 30 is disposed inside the fixed portion 45a. The fixed portion 45a is welded to the second stem portion 32. The flange portion 45b is connected to the lower end of the fixed portion 45a. A return spring 48 is disposed around the fixed member 45. The return spring 48 is a coil spring.

Fig. 8 illustrates the stator unit 6. The stator unit 6 includes a stator 60, a housing 70, and a positioning member 77.

The stator 60 has a cylindrical shape. The stator 60 includes an A-phase stator 61 and a B-phase stator 62.

The A-phase stator 61 includes a plurality of claw-pole type pole teeth 61a and 61b around the inner circumference. The tip ends of the pole teeth 61a point down, and the tip ends of the pole teeth 61b point up. The pole teeth 61a and the pole teeth 61b are alternately disposed at regular angular intervals in the circumferential direction. In this embodiment, the A-phase stator 61 includes 12 pole teeth 61a and 12 pole teeth 61b. The angle between pole teeth 61a and 61b adjacent to each other is 15 degrees. When the coil 61c of the A-phase stator 61 is energized, the pole teeth 61a and the pole teeth 61b have opposite polarities.

The B-phase stator 62 includes a plurality of claw-pole type pole teeth 62a and 62b around the inner circumference. The tip ends of the pole teeth 62a point down, and the tip ends of the pole teeth 62b point up. The pole teeth 62a and the pole teeth 62b are alternately disposed at regular angular intervals in the circumferential direction. In this embodiment, the B-phase stator 62 includes 12 pole teeth 62a and 12 pole teeth 62b. The angle between pole teeth 62a and 62b adjacent to each other is 15 degrees. When the coil 62c of the B-phase stator 62 is energized, the pole teeth 62a and the pole teeth 62b have opposite polarities.

The A-phase stator 61 and the B-phase stator 62 are coaxially disposed. The A-phase stator 61 and the B-phase stator 62 are in contact with each other. When viewed in the direction of the axis L, the angle between the pole teeth 61a of the A-phase stator 61 and the pole teeth 62a of the B-phase stator 62 adjacent to each other is 7.5 degrees. The coil 61c of the A-phase stator 61 and the coil 62c of the B-phase stator 62 are connected to lead wires 65.

The can 20 is disposed in the stator 60. The stator 60 constitutes a stepping motor 66 with the rotor 41 disposed in the can 20.

When a pulse signal is input to the coil 61c of the A-phase stator 61 and the coil 62c of the B-phase stator 62, the rotor 41 of the stepping motor 66 rotates. Pulses P[0] to P[7] illustrated in Figs. 10 to 17 are input to the stepping motor 66 in order. The expression "inputting a pulse to the stepping motor 66" in this specification is synonymous with "supplying a drive current according to the pulse to the stator 60 (coils 61c and 62c) of the stepping motor 66". In Figs. 10 to 17, the reference pole tooth 61a and the reference magnetic pole (S pole) of the rotor 41 are marked with a black circle for easy understanding of the positional relationship between the rotor 41 and the stator 60 (the A-phase stator 61 and the B-phase stator 62).

In rotating the rotor 41 in the closing direction (clockwise in Figs. 10 to 17), pulses P are cyclically input to the stepping motor 66 in descending order (in the order from pulse P[7] to pulse P[0]). When the rotor 41 is rotated in the closing direction, the rotor 41 and the valve stem holder 42 moves downward by the screw feed action of the internal thread 42c of the valve stem holder 42 and the external thread 43c of the guide bush 43. The valve stem holder 42 pushes the valve member 30 downward via the valve closing spring 47. The valve member 30 moves downward to bring the valve portion 33 into contact with the valve seat 18. The position of the rotor 41 at that time is a valve closing position Rc (Fig. 18). When the rotor 41 is further rotated from this state in the closing direction, the valve closing spring 47 is compressed to further move the rotor 41 and the valve stem holder 42 downward. The valve member 30 is not moved downward. When the movable stopper 42s of the valve stem holder 42 and the fixed stopper 44s of the stopper member 44 come into contact with each other, the rotation of the rotor 41 in the closing direction is limited. The position of the rotor 41 at this time is a rotation limit position Rx (Fig. 10).

In rotating the rotor 41 in the opening direction (counterclockwise in Figs. 10 to 17) opposite to the closing direction, pulses P are cyclically input to the stepping motor 66 in ascending order (in the order from pulse P[0] to pulse P[7]). When the rotor 41 is rotated in the opening direction, the rotor 41 and the valve stem holder 42 moves upward by the screw feed action of the internal thread 42c of the valve stem holder 42 and the external thread 43c of the guide bush 43. The valve stem holder 42 pushes the fixed member 45 upward. The valve member 30 moves upward with the fixed member 45 to separate the valve member 30 from the valve seat 18. The position of the rotor 41 at which the fluid flow rate at the valve port 17 (the degree of opening of the valve port 17) in a predetermined flow-rate measuring environment is a predetermined set value is referred to as a valve opening position Ro (Fig. 19). The set value is set as appropriate according to the configuration and application of the electric-operated valve 1.

The housing 70 is made of synthetic resin. The housing 70 is injection molded. The housing 70 houses the stator 60. The housing 70 includes a peripheral wall portion 71 and an upper wall portion 72.

The peripheral wall portion 71 has a cylindrical shape. The stator 60 is embedded inside the peripheral wall portion 71. The diameter of a space defined by the inner circumferential surface 71a of the peripheral wall portion 71 is equal to the diameter of a space defined by the stator inner circumferential surface 60a. The inner circumferential surface 71a connects to the stator inner circumferential surface 60a without level difference. The upper wall portion 72 is connected to the upper end of the peripheral wall portion 71. The inner circumferential surface 71a of the peripheral wall portion 71, the inner surface 72a of the upper wall portion 72, and the stator inner circumferential surface 60a form the inner space 74 of the stator unit 6. The can 20 is disposed in the inner space 74.

A positioning member 77 is fixed to the housing 70. The positioning member 77 is made of metal. Figs. 9A and 9B illustrate the positioning member 77. The positioning member 77 includes a flat plate portion 77a and two arm portions 77b. The flat plate portion 77a has a rectangular shape. The flat plate portion 77a is fixed to the lower end of the housing 70. The arm portions 77b have a corrugated plate shape. The arm portions 77b extend downward from the sides of the flat plate portion 77a opposing in the width direction (the lateral direction in Fig. 9B). The arm portions 77b are elastically deformable in the width direction of the flat plate portion 77a. The two arm portions 77b hold the first conduit 15. This allows the stator unit 6 to be positioned with respect to the valve body 10.

The label 7 is affixed to the outer circumferential surface of the body member 11. The label 7 is printed with valve opening point information J. The valve opening point information J contains valve opening point Nk and origin pulse pattern number PTx. The valve opening point Nk is the number of pulses (hereinafter referred to as "pulse number") input to the stepping motor 66 to rotate the rotor 41 from the rotation limit position Rx to the valve opening position Ro. The origin pulse pattern number PTx is used in an operation for positioning the rotor 41 in the electric-operated valve 1 to the rotation limit position Rx (a home positioning operation). The valve opening point information J is printed on the label 7, for example, in a two-dimensional code format. The valve opening point information J may be printed in a format other than the two-dimensional code format. The valve opening point information J may be printed directly on the outer circumferential surface of the body member 11 or impressed by laser light. Alternatively, the label 7 may be affixed to the outer surface of the housing 70. Alternatively, a radio-frequency (RF) tag on which valve opening point information J is recorded may be used in place of the label 7 on which valve opening point information J is printed. In other words, the valve opening point information J should only be recorded on the electric-operated valve 1 in a format readable by a device that controls the electric-operated valve 1.

In the electric-operated valve 1, the respective central axes of the valve port 17, the can 20, the valve member 30, the rotor 41, the valve stem holder 42, the guide bush 43, the stator 60 (the A-phase stator 61 and the B-phase stator 62) are aligned with the axis L.

Next, an example of a method of manufacturing the electric-operated valve 1 will be described.

Before manufacturing the electric-operated valve 1, the number of pulses (common pulse number Ni) to be input to the stepping motor 66 to rotate the rotor 41 from the valve closing position Rc to the valve opening position Ro is obtained using a reference electric-operated valve 1S with the same configuration as that of the electric-operated valve 1 and having high component accuracy and assembly accuracy. The valve closing position Rc and the valve opening position Ro may be the same (that is, common pulse number Ni = 0). The respective common pulse numbers Ni of a plurality of electric-operated valves 1 whose component accuracy and assembly accuracy are within a tolerance range have the same value.

The valve body assembly 5 and the stator unit 6 are produced, and the can 20 of the valve body assembly 5 is inserted into the inner space 74 of the stator unit 6. The first conduit 15 is held by the two arm portions 77b of the positioning member 77, and the stator unit 6 is positioned with respect to the valve body 10. Thus, the electric-operated valve 1 on which the label 7 is not affixed is obtained.

Next, the label 7 is produced. The valve opening point Nk and the origin pulse pattern number PTx of the electric-operated valve 1 are obtained to obtain the valve opening point information J to be printed to the label 7 using an inspection device (not shown) for factory shipment. The inspection device includes a computer and a memory.

The inspection device can input pulse signals (pulses P[0] to P[7]) to the stepping motor 66. The inspection device can change the torque of the stepping motor 66. The inspection device can detect the step-out of the stepping motor 66 on the basis of the value of current flowing through the stepping motor 66.

The lead wires 65 of the electric-operated valve 1 are connected to the inspection device. The inspection device inputs a sufficient number (for example, 200) of pulses P for the valve member 30 (the valve portion 33) to come away from the valve seat 18 to the stepping motor 66 of the electric-operated valve 1 cyclically in ascending order to rotate the rotor 41 in the opening direction. This causes the valve member 30 to come away from the valve seat 18.

Next, the inspection device sets a torque for rotating the rotor 41 to a first torque T1. The first torque T1 is a torque of a magnitude that cannot rotate the rotor 41 in the closing direction to the rotation limit position Rx, with the valve member 30 in contact with the valve seat 18. The magnitude of the first torque T1 is relatively small. The inspection device inputs the pulses P to the stepping motor 66 of the electric-operated valve 1 cyclically in descending order to rotate the rotor 41 in the closing direction with the first torque T1. The inspection device monitors the step-out of the stepping motor 66.

When the rotor 41 rotates in the closing direction, the valve member 30 moves toward the valve seat 18. The valve member 30 is brought into contact with the valve seat 18 in response to a pulse P (for example, pulse P[0] in Fig. 20A) input at a certain point in time. At that time, the rotor 41 is at the valve closing position Rc. The inspection device further inputs one pulse P (for example, pulse P[7] in Fig. 20B), with the valve member 30 in contact with the valve seat 18. Since the inspection device sets the torque for rotating the rotor 41 to the first torque T1, the inspection device cannot rotate the rotor 41 in the closing direction. This causes the step-out of the stepping motor 66, and the inspection device detects the first step-out of the stepping motor 66 (first step-out detection). The inspection device stores a pulse pattern number PT1 (for example, [7]) of the pulse P corresponding to the first step-out detection in the memory.

After the first step-out detection, the inspection device sets the torque for rotating the rotor 41 to a second torque T2. The second torque T2 is a torque of a magnitude that can rotate the rotor 41 in the closing direction to the rotation limit position Rx while compressing the valve closing spring 47, with the valve member 30 in contact with the valve seat 18. The second torque T2 may be a torque used in the normal operation (flow-rate control operation) of the electric-operated valve 1. The inspection device inputs a pulse P (for example, pulse P[7] in Fig. 20C) with the pulse pattern number PT1 stored in the memory at the first step-out detection to the stepping motor 66 of the electric-operated valve 1. Since the inspection device sets the torque for rotating the rotor 41 to the second torque T2, the inspection device can rotate the rotor 41 in the closing direction while the valve closing spring 47 is being compressed. This allows the stepping motor 66 to be returned from the step-out state to the normal state.

The inspection device inputs a pulse P to the stepping motor 66 of the electric-operated valve 1 cyclically in descending order (for example, from pulse P[6] in Fig. 20D) to further rotate the rotor 41 in the closing direction with the second torque T2.

When the rotor 41 rotates in the closing direction, the valve closing spring 47 is gradually compressed with the valve member 30 not moving in contact with the valve seat 18. The movable stopper 42s is brought into contact with the fixed stopper 44s in response to a pulse P (for example, pulse P[0] in Fig. 21A) input at a certain point in time. At that time, the rotor 41 is at the rotation limit position Rx. The inspection device further inputs one pulse P (for example, pulse P[7] in Fig. 21B), with the movable stopper 42s in contact with the fixed stopper 44s. Since the rotor 41 is at the rotation limit position Rx, the inspection device cannot rotate the rotor 41 in the closing direction. This causes the step-out of the stepping motor 66, and the inspection device detects the second step-out of the stepping motor 66 (second step-out detection).

The inspection device counts the number of pulses (a unique pulse number Nj) input to the stepping motor 66 between the first step-out detection and the second step-out detection (specifically, during the interval after the first step-out detection before the second step-out detection) and stores the unique pulse number Nj in the memory. The inspection device stores the pulse pattern number PT2 (for example, [0] in Fig. 21A) of the pulse P input immediately before the pulse P corresponding to the second step-out detection in the memory.

The inspection device adds up the common pulse number Ni and the unique pulse number Nj to obtain a valve opening point Nk (Nk = Nj + Ni), and sets the pulse pattern number PT2 as origin pulse pattern number PTx. The valve opening point Nk is information on the unique pulse number Nj. The inspection device prepares the label 7 on which the valve opening point information J containing the valve opening point Nk and the origin pulse pattern number PTx is printed with a label printer (not shown). The inspection device affixes the label 7 to the outer circumferential surface of the body member 11 with a label attaching machine (not shown) to complete the electric-operated valve 1. In place of the valve opening point Nk, the inspection device may contain the unique pulse number Nj in the valve opening point information J.

Next, an air conditioner 200 including the electric-operated valve 1 will be described. The electric-operated valve 1 is applicable to both of home air conditioners and in-car air conditioners.

Fig. 22 illustrates the air conditioner 200. The air conditioner 200 performs a cooling operation and a heating operation. Fig. 22 schematically illustrates the flow of a refrigerant in the cooling operation using the solid arrows and the flow of a refrigerant in the heating operation with the dashed arrows. In the cooling operation of the air conditioner 200, the refrigerant flows from a compressor 201, a flow-channel switching valve 202, an outdoor heat exchanger 203, the electric-operated valve 1, an indoor heat exchanger 205, and the flow-channel switching valve 202 in order and returns to the compressor 201. In the heating operation of the air conditioner 200, the refrigerant flows from the compressor 201, the flow-channel switching valve 202, the indoor heat exchanger 205, the electric-operated valve 1, the outdoor heat exchanger 203, and the flow-channel switching valve 202 in order and returns to the compressor 201. The electric-operated valve 1 is used as a flow control valve in the air conditioner 200.

The air conditioner 200 further includes an electronic control unit 210 that controls the compressor 201, the electric-operated valve 1, and so on. The electronic control unit 210 includes, for example, a microcomputer including a nonvolatile memory. The electronic control unit 210 controls the flow rate of the refrigerant at the valve port 17 (the degree of opening of the valve port 17) of the electric-operated valve 1 in the cooling operation and the heating operation. The electronic control unit 210 rotates the rotor 41 with the second torque T2.

The electric-operated valve 1 installed in the air conditioner 200 may vary in the valve opening point Nk according to the component accuracy or the assembly accuracy. The electronic control unit 210 can perform accurate flow control of the electric-operated valve 1 by using the valve opening point information J read from the label 7 of the electric-operated valve 1.

The nonvolatile memory of the electronic control unit 210 stores the valve opening point information J on the electric-operated valve 1 read with a two-dimensional code reader in the manufacturing process of the air conditioner 200.

Upon starting the electric-operated valve 1, the electronic control unit 210 executes a home positioning operation. In the home positioning operation, the electronic control unit 210 inputs a sufficient number of pulses P to bring the movable stopper 42s into contact with the fixed stopper 44s to the stepping motor 66 cyclically in descending order to rotate the rotor 41 in the closing direction. The electronic control unit 210 lastly inputs a pulse P (for example, pulse P[0]) with the origin pulse pattern number PTx in the valve opening point information J, then stops the input of the pulses P. Thus, the rotor 41 is positioned at the rotation limit position Rx.

Next, the electronic control unit 210 inputs pulses P to the stepping motor 66 cyclically in ascending order to rotate the rotor 41 in the opening direction. At that time, the electronic control unit 210 starts the input from a pulse P (for example, pulse P[1]) with a pulse pattern number one greater than the origin pulse pattern number PTx. In this embodiment, a pulse pattern number one greater than [7] is [0]. When the number of pulses input in ascending order reaches the valve opening point Nk, the electronic control unit 210 stops the input of the pulses P. Thus, the rotor 41 is positioned at the valve opening position Ro, and the home positioning operation is completed.

As described above, the electric-operated valve 1 according to this embodiment includes the valve body 10 including the valve seat 18, the rotor 41 rotatable with respect to the valve body 10, the stator 60 constituting the stepping motor 66 together with the rotor 41, the valve member 30 that faces the valve seat 18 and that is pushed toward the valve seat 18 via the valve closing spring 47 when the rotor 41 rotates in a closing direction, and the movable stopper 42s and the fixed stopper 44s that, when the rotor 41 is at the rotation limit position Rx where the rotor 41 is further rotated in the closing direction from the valve closing position Rc where the valve member 30 is in contact with the valve seat 18, limit rotation of the rotor 41 in the closing direction.

The inspection device, in a process for manufacturing the electric-operated valve 1,
(1) inputs a pulse P to the stepping motor 66 cyclically in descending order to rotate the rotor 41 in the closing direction with a first torque T1;
(2) upon detecting step-out of the stepping motor 66 when rotating the rotor 41 with the first torque T1 (hereinafter referred to as "first step-out detection"), inputs the pulse P to the stepping motor 66 cyclically in descending order to rotate the rotor 41 in the closing direction with the second torque T2;
(3) upon detecting step-out of the stepping motor 66 when rotating the rotor 41 with the second torque T2 (hereinafter referred to as "second step-out detection"), obtains a pulse number (a unique pulse number Nj) input between the first step-out detection and the second step-out detection; and
(4) affixes a label 7 on which valve opening point information J containing a valve opening point Nk calculated using the unique pulse number Nj is printed to the outer circumferential surface of the body member 11.

Thus, the first step-out corresponds to the valve closing position Rc, the second step-out corresponds to the rotation limit position Rx, and the number of pulses input between the first step-out detection and the second step-out detection is taken as the unique pulse number Nj for rotating the rotor 41 from the rotation limit position Rx to the valve closing position Rc. The unique pulse number Nj is related to the valve closing position Rc of the rotor 41. The valve opening point Nk calculated using the unique pulse number Nj is related to the valve opening position Ro as a reference for flow control. This allows easily obtaining the position of the rotor 41 in the electric-operated valve 1 as a reference for flow control without measuring the flow rate of the fluid.

The electric-operated valve 1 takes the position of the rotor 41 at the point in time the valve member 30 comes into contact with the valve seat 18 as the valve closing position Rc and detects the step-out of the stepping motor 66 when one pulse P is further input, with the rotor 41 at the valve closing position Rc. However, depending on the configuration of the electric-operated valve 1, the first step-out of the stepping motor 66 may be detected when a plurality of pulses P (about 2 to 30 pulses P) are input with the rotor 41 at the position when the valve member 30 comes into contact with the valve seat 18. In this case, a common pulse number Ni is set to a number containing the number of pulses input to the stepping motor 66 from the point in time the valve member 30 comes into contact with the valve seat 18 until the first step-out is detected.

The common pulse number Ni will be specifically described.

In this embodiment, the position of the rotor 41 when the rotor 41 is rotated in the closing direction with the first torque T1 to bring the valve member 30 into contact with the valve seat 18 is taken as the valve closing position Rc. When the rotor 41 is at the valve closing position Rc, the first step-out of the stepping motor 66 occurs. Actually, the specifications of the valve closing spring 47 and the first torque T1 may be set for the electric-operated valve 1 so that, when the rotor 41 is at a position (hereinafter referred to as "contact position Rt") at the point in time the valve member 30 comes into contact with the valve seat 18, the valve closing spring 47 is in a state immediately before being compressed, and when the rotor 41 rotates from the contact position Rt in the closing direction to slightly compress the valve closing spring 47, the first step-out of the stepping motor 66 occurs. In other words, the first torque T1 is set so that the downward load applied to the valve stem holder 42 by rotation of the rotor 41 with the first torque T1 and the upward load applied to the valve stem holder 42 by the valve closing spring 47 are balanced before the rotor 41 passes through the contact position Rt to reach the rotation limit position Rx, and the first torque T1 is a torque of a magnitude that cannot rotate the rotor 41 in the closing direction to the rotation limit position Rx, with the valve member 30 in contact with the valve seat 18. In this case, when the rotor 41 is positioned between the contact position Rt and the rotation limit position Rx, the first step-out of the stepping motor 66 occurs, and the position of the rotor 41 at the first step-out is detected as the valve closing position Rc. This position is also referred to as a step-out detection position Rd. When the rotor 41 is at the step-out detection position Rd, the upward load (spring load) applied to the valve stem holder 42 by the valve closing spring 47 is received by the guide bush 43 to cause the upward-facing surface of the internal thread 42c to push the downward-facing surface of the external thread 43c (Fig. 23A).

In the electric-operated valve 1, when the rotor 41 rotates from the step-out detection position Rd in the opening direction to reach the contact position Rt, the valve closing spring 47 is decompressed to eliminate the spring load to bring a state in which the upward-facing surface of the internal thread 42c is in slight-contact with the downward-facing surface of the external thread 43c (or a state in which there is a slight gap therebetween). At that time, a load (differential pressure load) generated by the differential pressure between the refrigerant pressure in the valve chamber 14 and the refrigerant pressure in the valve port 17 may be applied to the valve member 30 to make the valve member 30 kept contact with the valve seat 18 depending on the direction and magnitude of the differential pressure load. When the rotor 41 rotates from the contact position Rt in the opening direction, the downward-facing surface of the internal thread 42c and the upward-facing surface of the external thread 43c come into contact with each other by the gravity and the differential pressure load acting on the valve member 30, the rotor 41, and the valve stem holder 42 (Fig. 23B). This state is immediately before the valve member 30 comes away from the valve seat 18, and a position of the rotor 41 in this state may be taken as the valve opening position Ro. Alternatively, the rotor 41 is further rotated in the opening direction in this state, and the position of the rotor when the valve member 30 comes away from the valve seat 18 may be taken as the valve opening position Ro.

In other words, the common pulse number Ni may include (1) the number of pulses input to the stepping motor 66 to rotate the rotor 41 from the step-out detection position Rd to the contact position Rt and (2) the number of pulses input to the stepping motor 66 to rotate the rotor 41 from a position where the upward-facing surface of the internal thread 42c and the downward-facing surface of the external thread 43c are in contact with each other to a position where the downward-facing surface of the internal thread 42c and the upward-facing surface of the external thread 43c are in contact with each other (that is, a pulse number corresponding to the allowance between the internal thread 42c and the external thread 43c). The common pulse number Ni, the first torque T1, and the second torque T2 also apply to electric-operated valves 1A and 1B described later.

The electric-operated valve 1 described above detects the step-out of the stepping motor 66 when one pulse P is further input, with the rotor 41 at the rotation limit position Rx. However, depending on the configuration of the electric-operated valve 1, the second step-out of the stepping motor 66 may be detected when a plurality of pulses P (about 2 or 30 pulses P) are input, with the rotor 41 at the rotation limit position Rx. In this case, the number of pulses (correcting pulse number) to be input to the stepping motor 66 from the point in time the rotor 41 reaches the rotation limit position Rx until the second step-out is detected is obtained in advance using the reference electric-operated valve 1S. Then, the inspection device corrects the number of pulses input between the first step-out detection and the second step-out detection to a pulse number for rotating the rotor 41 from the rotation limit position Rx to the valve closing position Rc using the correcting pulse number obtained using the reference electric-operated valve 1S to obtain the unique pulse number Nj.

The electric-operated valve 1 described above is directly controlled by the electronic control unit 210 that is an upper-level device. In addition, the present invention is also applicable to an electric-operated valve including a control unit that rotates the stepping motor 66 on the basis of a command received from an upper-level device, like the electric-operated valves 1A and 1B described below.

The electric-operated valve 1A including the control unit will be described hereinbelow.

The electric-operated valve 1A has the same (including substantially the same) configuration as that of the electric-operated valve 1 except that the electric-operated valve 1A includes the control unit (not shown). The control unit is installed in the stator unit 6.

The control unit includes a microcomputer. An example of the microcomputer is a microcomputer in which a central processing unit, a nonvolatile memory, a working memory, a communication module, a motor driver, and so on are integrated in one package.

The control unit can input pulse signals (pulses P[0] to P[7]) to the stepping motor 66. The control unit can change the torque of the stepping motor 66. The control unit can detect the step-out of the stepping motor 66 on the basis of the value of current flowing through the stepping motor 66. The nonvolatile memory of the control unit stores the common pulse number Ni.

Upon receiving an initialization command from an upper-level device, the control unit executes an initialization operation. In the initialization operation, the control unit executes the same (including substantially the same) operation as the operation for obtaining the valve opening point information J in the inspection device described above.

In the initialization operation, the control unit inputs a sufficient number (for example, 200) of pulses P for the valve member 30 (the valve portion 33) to come away from the valve seat 18 to the stepping motor 66 cyclically in ascending order to rotate the rotor 41 in the opening direction. This causes the valve member 30 to come away from the valve seat 18.

Next, the control unit sets a torque for rotating the rotor 41 to the first torque T1. The control unit inputs the pulses P to the stepping motor 66 cyclically in descending order to rotate the rotor 41 in the closing direction with the first torque T1. The control unit monitors the step-out of the stepping motor 66.

When the rotor 41 rotates in the closing direction, the valve member 30 moves toward the valve seat 18. The valve member 30 is brought into contact with the valve seat 18 in response to a pulse P (for example, pulse P[0]) input at a certain point in time. At that time, the rotor 41 is at the valve closing position Rc. The control unit further inputs one pulse P (for example, pulse P[7]), with the valve member 30 in contact with the valve seat 18. Since the control unit sets the torque for rotating the rotor 41 to the first torque T1, the control unit cannot rotate the rotor 41 in the closing direction. This causes the step-out of the stepping motor 66, and the control unit detects the first step-out of the stepping motor 66 (first step-out detection). The control unit stores the pulse pattern number PT1 (for example, [7]) of the pulse P corresponding to the first step-out detection in a working memory.

After the first step-out detection, the control unit sets the torque for rotating the rotor 41 to the second torque T2. The control unit inputs a pulse P (for example, pulse P[7]) with the pulse pattern number PT1 stored in the working memory at the first step-out detection to the stepping motor 66. Since the control unit sets the torque for rotating the rotor 41 to the second torque T2, the control unit can rotate the rotor 41 in the closing direction while compressing the valve closing spring 47. This allows the stepping motor 66 to be returned from the step-out state to a normal state.

The control unit inputs pulses P to the stepping motor 66 cyclically in descending order to further rotate the rotor 41 in the closing direction with the second torque T2.

When the rotor 41 rotates in the closing direction, the valve closing spring 47 is gradually compressed with the valve member 30 not moving in contact with the valve seat 18. The movable stopper 42s is brought into contact with the fixed stopper 44s in response to a pulse P (for example, pulse P[0]) input at a certain point in time. At that time, the rotor 41 is at the rotation limit position Rx. The control unit further input one pulse P (for example, pulse P[7]), with the movable stopper 42s in contact with the fixed stopper 44s. Since the rotor 41 is at the rotation limit position Rx, the control unit cannot rotate the rotor 41 in the closing direction. This causes the step-out of the stepping motor 66, and the control unit detects the second step-out of the stepping motor 66 (second step-out detection).

The control unit counts the number of pulses (a unique pulse number Nj) input to the stepping motor 66 between the first step-out detection and the second step-out detection (specifically, during the interval after the first step-out detection before the second step-out detection) and stores the unique pulse number Nj in the working memory. The control unit stores the pulse pattern number PT2 (for example, [0]) of the pulse P input immediately before the pulse P corresponding to the second step-out detection in the working memory. The control unit inputs the pulse P (for example, pulse P[0]) with the pulse pattern number PT2 to the stepping motor 66. This allows the stepping motor 66 to be returned from the step-out state to the normal state to position the rotor 41 at the rotation limit position Rx.

The control unit adds up the common pulse number Ni and the unique pulse number Nj to calculate the valve opening point Nk (Nk = Nj + Ni) and stores the valve opening point Nk in the working memory. The control unit may store the valve opening point Nk and the pulse pattern number PT2 in the nonvolatile memory. The valve opening point Nk and the pulse pattern number PT2 (that is, the origin pulse pattern number PTx) are used in a home positioning operation.

The control unit inputs the pulses P to the stepping motor 66 cyclically in ascending order to rotate the rotor 41 in the opening direction. At this time, the control unit starts inputting from a pulse P (for example pulse P[1]) with a pulse pattern number one greater than the pulse pattern number PT2. When the number of pulses input in ascending order reaches the valve opening point Nk, the control unit stops the input of the pulses P. Thus, the rotor 41 is positioned at the valve opening position Ro, and the initialization operation of the electric-operated valve 1A is completed.

The control unit of the electric-operated valve 1A, in an initialization operation,
(1) inputs a pulse P to the stepping motor 66 to rotate the rotor 41 in the closing direction with a first torque T1,
(2) upon detecting step-out of the stepping motor 66 when rotating the rotor 41 with the first torque T1 (hereinafter referred to as "first step-out detection"), inputs the pulse P to the stepping motor 66 to rotate the rotor 41 in the closing direction with the second torque T2, and
(3) upon detecting step-out of the stepping motor 66 when rotating the rotor 41 with the second torque T2 (hereinafter referred to as "second step-out detection"), obtains a pulse number (a unique pulse number Nj) input between the first step-out detection and the second step-out detection.

Thus, the first step-out corresponds to the valve closing position Rc, the second step-out corresponds to the rotation limit position Rx, and the number of pulses input between the first step-out detection and the second step-out detection is taken as the unique pulse number Nj for rotating the rotor 41 from the rotation limit position Rx to the valve closing position Rc. The unique pulse number Nj is related to the valve closing position Rc of the rotor 41. The valve opening point Nk calculated using the unique pulse number Nj is related to the valve opening position Ro as a reference for flow control. This allows easily obtaining the position of the rotor 41 in the electric-operated valve 1A as a reference for flow control without measuring the flow rate of the fluid.

The control unit of the electric-operated valve 1A corrects the number of pulses input to the stepping motor 66 between the first step-out detection and the second step-out detection to a pulse number for rotating the rotor 41 from the rotation limit position Rx to the valve closing position Rc using the correcting pulse number obtained using the reference electric-operated valve 1S to obtain the unique pulse number Nj as needed, as the inspection device described above does.

The electric-operated valve 1B including the control unit will be described hereinbelow.

The electric-operated valve 1B has the same (including substantially the same) hardware configuration as that of the electric-operated valve 1A. The control unit executes an initializing process using the common pulse number Ni stored in the nonvolatile memory as the valve opening point Nk.

Upon receiving an initialization command from an upper-level device, the control unit executes an initialization operation.

In an initialization operation not representing the present invention, the control unit inputs a sufficient number (for example, 200) of pulses P for the valve member 30 (the valve portion 33) to come away from the valve seat 18 to the stepping motor 66 cyclically in ascending order to rotate the rotor 41 in the opening direction. This causes the valve member 30 to come away from the valve seat 18.

Next, the control unit sets a torque for rotating the rotor 41 to the first torque T1. The control unit inputs the pulses P to the stepping motor 66 cyclically in descending order to rotate the rotor 41 in the closing direction with the first torque T1. The control unit monitors the step-out of the stepping motor 66.

When the rotor 41 rotates in the closing direction, the valve member 30 moves toward the valve seat 18. The valve member 30 is brought into contact with the valve seat 18 in response to a pulse P (for example, pulse P[0]) input at a certain point in time. At that time, the rotor 41 is at the valve closing position Rc. The control unit further inputs one pulse P (for example, pulse P[7]), with the valve member 30 in contact with the valve seat 18. Since the control unit sets the torque for rotating the rotor 41 to the first torque T1, the control unit cannot rotate the rotor 41 in the closing direction. This causes the step-out of the stepping motor 66, and the control unit detects the step-out of the stepping motor 66.

The control unit stores the pulse pattern number PT1 (for example, [0]) of the pulse P input immediately before the pulse P corresponding to the step-out detection in the working memory. The control unit inputs the pulse P (for example, pulse P[0]) with the pulse pattern number PT1 to the stepping motor 66. This causes the stepping motor 66 to be returned from the step-out state to the normal state to position the rotor 41 at the valve closing position Rc. In other words, control unit obtains the valve closing position Rc on the basis of the step-out detection.

The control unit inputs the pulses P to the stepping motor 66 cyclically in ascending order to rotate the rotor 41 in the opening direction. At this time, the control unit starts inputting from a pulse P (for example pulse P[1]) with a pulse pattern number one greater than the pulse pattern number PT1. When the number of pulses input in ascending order reaches the common pulse number Ni, the control unit stops the input of the pulses P. Thus, the rotor 41 is positioned at the valve opening position Ro, and the initialization operation of the electric-operated valve 1B is completed.

The control unit of the electric-operated valve 1B, in an initialization operation not representing the present invention,
(1) inputs a pulse P to the stepping motor 66 to rotate the rotor 41 in the closing direction with a first torque T1, and
(2) upon detecting step-out of the stepping motor 66 when rotating the rotor 41 with the first torque T1, obtains a position of the rotor 41 when the step-out is detected as a valve closing position Rc where the valve member 30 comes into contact with the valve seat 18.

This allows the control unit to obtain the valve closing position Rc of the rotor 41 by detecting step-out. The valve closing position Rc is the position of the rotor 41 as a reference of flow control of the electric-operated valve 1B. This allows easily obtaining the position of the rotor 41 in the electric-operated valve 1B as a reference for flow control without measuring the flow rate of the fluid.

According to an example not representing the present invention, the electric-operated valve 1B does not have to include the stopper member 44 and the fixed stopper 44s of the valve stem holder 42. In this configuration, the first torque T1 is set so that the downward load applied to the valve stem holder 42 (rotor 41) by rotation of the rotor 41 with the first torque T1 and the upward load applied to the valve stem holder 42 by the valve closing spring 47 are balanced before the valve closing spring 47 is compressed to the maximum extent. The first torque T1 is a torque of a magnitude that cannot rotate the rotor 41 in the closing direction until the valve closing spring 47 is compressed to the maximum extent, with the valve member 30 in contact with the valve seat 18. The electric-operated valve 1B may have a configuration in which the valve closing spring 47 is omitted and the valve stem holder 42 directly pushes the valve member 30 downward. With this configuration, the position of the rotor 41 at the point in time the valve member 30 comes into contact with the valve seat 18 is the valve closing position Rc and the rotation limit position Rx. In this case, the first torque T1 is a torque of a magnitude that cannot rotate the rotor 41 in the closing direction, with the valve member 30 in contact with the valve seat 18.

The control unit of the electric-operated valve 1A detects the step-out of the stepping motor 66 on the basis of the value of current flowing through the stepping motor 66. Alternatively, the electric-operated valve 1A may include a permanent magnet that rotates with the rotor 41 and a magnetic sensor that detects the direction (rotational angle) of the magnetic field of the permanent magnet, and the control unit may detect the step-out by obtaining the rotation angle of the rotor 41 on the basis of the signal from the magnetic sensor. This is the same for the electric-operated valve 1B as for the electric-operated valve 1A.

In the air conditioner 200 including the electric-operated valve 1, the electronic control unit 210 may perform the same (including substantially the same) operation as that of the control unit of the electric-operated valve 1A or the control unit of the electric-operated valve 1B.

In other words, the electronic control unit 210, in an initialization operation for the electric-operated valve 1,
(1) inputs a pulse P to the stepping motor 66 to rotate the rotor 41 in the closing direction with the first torque T1,
(2) upon detecting step-out of the stepping motor 66 when rotating the rotor 41 with the first torque T1 (hereinafter referred to as "first step-out detection"), inputs the pulse P to the stepping motor 66 to rotate the rotor 41 in the closing direction with the second torque T2, and
(3) upon detecting step-out of the stepping motor 66 when rotating the rotor 41 with the second torque T2 (hereinafter referred to as "second step-out detection"), obtains a pulse number (a unique pulse number Nj) input between the first step-out detection and the second step-out detection.

The electronic control unit 210 calculates a valve opening point Nk using the unique pulse number Nj and stores the valve opening point Nk in a nonvolatile memory. The electronic control unit 210 performs flow control using the valve opening point Nk.

Alternatively, the electronic control unit 210, in an initialization operation not representing the present invention,
(1) inputs a pulse P to the stepping motor 66 to rotate the rotor 41 in the closing direction with the first torque T1, and
(2) upon detecting step-out of the stepping motor 66 when rotating the rotor 41 with the first torque T1, obtains a position of the rotor 41 when the step-out is detected as a valve closing position Rc where the valve member 30 comes into contact with the valve seat 18.

The electronic control unit 210 calculate a valve opening point Nk using the valve closing position Rc and stores the valve opening point Nk in a nonvolatile memory. The electronic control unit 210 performs flow control using the valve opening point Nk.

In this specification, the terms indicating shapes, such as "cylindrical" and "columnar", are also used for components and members substantially having the shapes indicated by the terms. For example, "a cylindrical member" includes a cylindrical member and a substantially cylindrical member.
the control unit may detect the step-out by obtaining the rotation angle of the rotor 41 on the basis of the signal from the magnetic sensor. This is the same for the electric-operated valve 1B as for the electric-operated valve 1A.

In the air conditioner 200 including the electric-operated valve 1, the electronic control unit 210 may perform the same (including substantially the same) operation as that of the control unit of the electric-operated valve 1A or the control unit of the electric-operated valve 1B.

In other words, the electronic control unit 210, in an initialization operation for the electric-operated valve 1,
(1) inputs a pulse P to the stepping motor 66 to rotate the rotor 41 in the closing direction with the first torque T1,
(2) upon detecting step-out of the stepping motor 66 when rotating the rotor 41 with the first torque T1 (hereinafter referred to as "first step-out detection"), inputs the pulse P to the stepping motor 66 to rotate the rotor 41 in the closing direction with the second torque T2, and
(3) upon detecting step-out of the stepping motor 66 when rotating the rotor 41 with the second torque T2 (hereinafter referred to as "second step-out detection"), obtains a pulse number (a unique pulse number Nj) input between the first step-out detection and the second step-out detection.

The electronic control unit 210 calculates a valve opening point Nk using the unique pulse number Nj and stores the valve opening point Nk in a nonvolatile memory. The electronic control unit 210 performs flow control using the valve opening point Nk.

Alternatively, the electronic control unit 210, in an initialization operation,
(1) inputs a pulse P to the stepping motor 66 to rotate the rotor 41 in the closing direction with the first torque T1, and
(2) upon detecting step-out of the stepping motor 66 when rotating the rotor 41 with the first torque T1, obtains a position of the rotor 41 when the step-out is detected as a valve closing position Rc where the valve member 30 comes into contact with the valve seat 18.

The electronic control unit 210 calculate a valve opening point Nk using the valve closing position Rc and stores the valve opening point Nk in a nonvolatile memory. The electronic control unit 210 performs flow control using the valve opening point Nk.

In this specification, the terms indicating shapes, such as "cylindrical" and "columnar", are also used for components and members substantially having the shapes indicated by the terms. For example, "a cylindrical member" includes a cylindrical member and a substantially cylindrical member.

Having described embodiments of the present invention, it is to be understood that the present invention is not limited to the embodiments. It is therefore to be understood that any addition, deletion, design change of components of the embodiments, and any appropriate combination of features of the embodiments made by those skilled in the art are included in the scope of the invention unless departing from the spirit of the present invention.

## Claims

1. An electric-operated valve (1) comprising:
a valve body (10) including a valve seat (18);
a rotor (41) rotatable with respect to the valve body (10);
a stator (60) constituting a stepping motor (66) together with the rotor (41);
a valve member (30) that faces the valve seat (18) and that is pushed toward the valve seat (18) via a coil spring (47) when the rotor (41) rotates in a closing direction;
a stopper (44) that, when the rotor (41) is at a rotation limit position (Rx) where the rotor (41) is further rotated in the closing direction from a valve closing position (Rc) where the valve member (30) is in contact with the valve seat (18), limits rotation of the rotor (41) in the closing direction; and
a control unit (210),
wherein the control unit (210) is configured to
(i) input a pulse (P) to the stepping motor (66) to rotate the rotor (41) in the closing direction with a first torque (T1),
(ii) upon detecting step-out of the stepping motor (66) when rotating the rotor (41) with the first torque (T1) (hereinafter referred to as "first step-out detection"), input the pulse (P) to the stepping motor (66) to rotate the rotor (41) in the closing direction with a second torque (T2), and
(iii) upon detecting step-out of the stepping motor (66) when rotating the rotor (41) with the second torque (T2) (hereinafter referred to as "second step-out detection"), obtain the number of pulses (a pulse number) (Nj) input between the first step-out detection and the second step-out detection,
wherein the first torque (T1) is a torque of a magnitude incapable of rotating the rotor (41) in the closing direction to the rotation limit position (Rx), with the valve member (30) in contact with the valve seat (18), and
wherein the second torque (T2) is a torque of a magnitude capable of rotating the rotor (41) in the closing direction to the rotation limit position (Rx) while compressing the coil spring (47), with the valve member (30) in contact with the valve seat (18).

2. A method of controlling an electric-operated valve (1) comprising:
a valve body (10) including a valve seat (18);
a rotor (41) rotatable with respect to the valve body (10);
a stator (60) constituting a stepping motor (66) together with the rotor (41);
a valve member (30) that faces the valve seat (18) and that is pushed toward the valve seat (18) via a coil spring (47) when the rotor (41) rotates in a closing direction; and
a stopper (44) that, when the rotor (41) is at a rotation limit position (Rx) where the rotor (41) is further rotated in the closing direction from a valve closing position (Rc) where the valve member (30) is in contact with the valve seat (18), limits rotation of the rotor (41) in the closing direction, the method comprising:
(i) inputting a pulse (P) to the stepping motor (66) to rotate the rotor (41) in the closing direction with a first torque (T1);
(ii) upon detecting step-out of the stepping motor (66) when rotating the rotor (41) with the first torque (T1) (hereinafter referred to as "first step-out detection"), inputting the pulse (P) to the stepping motor (66) to rotate the rotor (41) in the closing direction with a second torque (T2); and
(iii) upon detecting step-out of the stepping motor (66) when rotating the rotor (41) with the second torque (T2) (hereinafter referred to as "second step-out detection"), obtaining the number of pulses (a pulse number) (Nj) input between the first step-out detection and the second step-out detection,
wherein the first torque (T1) is a torque of a magnitude incapable of rotating the rotor (41) in the closing direction to the rotation limit position (Rx), with the valve member (30) in contact with the valve seat (18), and
wherein the second torque (T2) is a torque of a magnitude capable of rotating the rotor (41) in the closing direction to the rotation limit position (Rx) while compressing the coil spring (47), with the valve member (30) in contact with the valve seat (18).

3. The method of controlling the electric-operated valve (1) according to Claim 2, the method further comprising:
(iv) calculating information on the pulse number using the pulse number,
wherein the information comprises a pulse number that is input to the stepping motor (66) to rotate the rotor (41) from the rotation limit position (Rx) to a valve opening position (Ro) at which a fluid flow rate in a valve port (17) enclosed by the valve seat (18) is a set value.

## Patentansprüche

1. Ein elektrisch betriebenes Ventil (1), umfassend:
einen Ventilkörper (10), der einen Ventilsitz (18) aufweist;
einen Rotor (41), der relativ zum Ventilkörper (10) drehbar ist;
einen Stator (60), der zusammen mit dem Rotor (41) einen Schrittmotor (66) bildet;
ein Ventilelement (30), das dem Ventilsitz (18) gegenüberliegt und das bei Drehen des Rotors (41) in einer Schließrichtung über eine Schraubenfeder (47) gegen den Ventilsitz (18) gedrückt wird;
einen Anschlag (44), der, wenn sich der Rotor (41) an einer Rotationsendstellung (Rx) befindet, in der der Rotor (41) über eine Ventilschließposition (Rc), bei der das Ventilelement (30) den Ventilsitz (18) berührt, hinaus in Schließrichtung weitergedreht ist, die Drehung des Rotors (41) in Schließrichtung begrenzt; und
eine Steuereinheit (210),
wobei die Steuereinheit (210) eingerichtet ist, um:
(i) einen Impuls (P) an den Schrittmotor (66) einzugeben, um den Rotor (41) mit einem ersten Drehmoment (T1) in Schließrichtung zu drehen,
(ii) bei Erkennen eines Schrittverlusts des Schrittmotors (66) bei Drehen des Rotors (41) mit dem ersten Drehmoment (T1) (im Folgenden als "erste Schrittverlust-Erkennung" bezeichnet) den Impuls (P) an den Schrittmotor (66) einzugeben, um den Rotor (41) mit einem zweiten Drehmoment (T2) in Schließrichtung zu drehen, und
(iii) bei Erkennen eines Schrittverlusts des Schrittmotors (66) bei Drehen des Rotors (41) mit dem zweiten Drehmoment (T2) (im Folgenden als "zweite Schrittverlust-Erkennung" bezeichnet) die zwischen der ersten und zweiten Schrittverlust-Erkennung eingegebenen Impulse (Impulsanzahl) (Nj) zu ermitteln,
wobei das erste Drehmoment (T1) ein Drehmoment von solcher Größe ist, dass es nicht ausreicht, den Rotor (41) in Schließrichtung bis zur Rotationsendstellung (Rx) zu drehen, während das Ventilelement (30) am Ventilsitz (18) anliegt, und
wobei das zweite Drehmoment (T2) ein Drehmoment von solcher Größe ist, dass es ausreicht, den Rotor (41) in Schließrichtung bis zur Rotationsendstellung (Rx) zu drehen, wobei die Schraubenfeder (47) zusammengedrückt wird und das Ventilelement (30) am Ventilsitz (18) anliegt.

2. Ein Verfahren zum Steuern eines elektrisch betriebenen Ventils (1), umfassend:
einen Ventilkörper (10), der einen Ventilsitz (18) aufweist;
einen Rotor (41), der relativ zum Ventilkörper (10) drehbar ist;
einen Stator (60), der zusammen mit dem Rotor (41) einen Schrittmotor (66) bildet;
ein Ventilelement (30), das dem Ventilsitz (18) gegenüberliegt und das bei Drehen des Rotors (41) in einer Schließrichtung über eine Schraubenfeder (47) gegen den Ventilsitz (18) gedrückt wird; und
einen Anschlag (44), der, wenn sich der Rotor (41) an einer Rotationsendstellung (Rx) befindet, in der der Rotor (41) über eine Ventilschließposition (Rc), bei der das Ventilelement (30) den Ventilsitz (18) berührt, hinaus in Schließrichtung weitergedreht ist, die Drehung des Rotors (41) in Schließrichtung begrenzt,
wobei das Verfahren umfasst:
(i) Eingeben eines Impulses (P) an den Schrittmotor (66), um den Rotor (41) mit einem ersten Drehmoment (T1) in Schließrichtung zu drehen,
(ii) bei Erkennen eines Schrittverlusts des Schrittmotors (66) bei Drehen des Rotors (41) mit dem ersten Drehmoment (T1) (im Folgenden als "erste Schrittverlust-Erkennung" bezeichnet), Eingeben des Impulses (P) an den Schrittmotor (66), um den Rotor (41) mit einem zweiten Drehmoment (T2) in Schließrichtung zu drehen,
(iii) bei Erkennen eines Schrittverlusts des Schrittmotors (66) bei Drehen des Rotors (41) mit dem zweiten Drehmoment (T2) (im Folgenden als "zweite Schrittverlust-Erkennung" bezeichnet), Ermitteln der zwischen der ersten und zweiten Schrittverlust-Erkennung eingegebenen Impulse (Impulsanzahl) (Nj),
wobei das erste Drehmoment (T1) ein Drehmoment von solcher Größe ist, dass es nicht ausreicht, den Rotor (41) in Schließrichtung bis zur Rotationsendstellung (Rx) zu drehen, während das Ventilelement (30) am Ventilsitz (18) anliegt, und
wobei das zweite Drehmoment (T2) ein Drehmoment von solcher Größe ist, dass es ausreicht, den Rotor (41) in Schließrichtung bis zur Rotationsendstellung (Rx) zu drehen, wobei die Schraubenfeder (47) zusammengedrückt wird und das Ventilelement (30) am Ventilsitz (18) anliegt.

3. Das Verfahren zum Steuern des elektrisch betriebenen Ventils (1) gemäß Anspruch 2,
wobei das Verfahren ferner umfasst:
(iv) Berechnen von Informationen über die Impulsanzahl unter Verwendung der ermittelten Impulsanzahl,
wobei die Information eine Impulsanzahl umfasst, die an den Schrittmotor (66) eingegeben wird, um den Rotor (41) von der Rotationsendstellung (Rx) zu einer Ventilöffnungsposition (Ro) zu drehen, bei der ein Fluiddurchfluss durch eine vom Ventilsitz (18) umschlossene Ventilöffnung (17) einen Sollwert erreicht.

## Revendications

1. Soupape à commande électrique (1) comportant :
un corps de soupape (10) incluant un siège de soupape (18) ;
un rotor (41) pouvant tourner par rapport au corps de soupape (10) ;
un stator (60) constituant un moteur pas à pas (66) en association avec le rotor (41) ;
un élément de soupape (30) qui est dirigé vers le siège de soupape (18) et qui est poussé vers le siège de soupape (18) via un ressort hélicoïdal (47) lorsque le rotor (41) tourne dans un sens de fermeture ;
une butée (44) qui, lorsque le rotor (41) est à une position de limite de rotation (Rx) où le rotor (41) est davantage tourné dans le sens de fermeture à partir d'une position de fermeture de soupape (Rc) où l'élément de soupape (30) est en contact avec le siège de soupape (18), limite une rotation du rotor (41) dans le sens de fermeture ; et
une unité de commande (210),
dans laquelle l'unité de commande (210) est configurée pour :
(i) appliquer une impulsion (P) à l'entrée du moteur pas à pas (66) pour faire tourner le rotor (41) dans le sens de fermeture avec un premier couple (T1),
(ii) lorsqu'un décrochage du moteur pas-à-pas (66) est détecté lors de la rotation du rotor (41) avec le premier couple (T1) (par la suite appelée "première détection de décrochage"), appliquer l'impulsion (P) à l'entrée du moteur pas-à-pas (66) pour faire tourner le rotor (41) dans le sens de fermeture avec un second couple (T2), et
(iii) lorsqu'un décrochage du moteur pas-à-pas (66) est détecté lors de la rotation du rotor (41) avec le second couple (T2) (par la suite appelée "seconde détection de décrochage"), obtenir le nombre d'impulsions (un nombre d'impulsions) (Nj) appliquées à l'entrée entre la première détection de décrochage et la seconde détection de décrochage,
dans laquelle le premier couple (T1) est un couple d'une grandeur incapable de faire tourner le rotor (41) dans le sens de fermeture jusqu'à la position de limite de rotation (Rx), avec l'élément de soupape (30) en contact avec le siège de soupape (18), et
dans laquelle le second couple (T2) est un couple d'une grandeur capable de faire tourner le rotor (41) dans le sens de fermeture jusqu'à la position de limite de rotation (Rx) tout en comprimant le ressort hélicoïdal (47), avec l'élément de soupape (30) en contact avec le siège de soupape (18).

2. Procédé de commande d'une soupape à commande électrique (1) comportant :
un corps de soupape (10) incluant un siège de soupape (18) ;
un rotor (41) pouvant tourner par rapport au corps de soupape (10) ;
un stator (60) constituant un moteur pas à pas (66) en association avec le rotor (41) ;
un élément de soupape (30) qui est dirigé vers le siège de soupape (18) et qui est poussé vers le siège de soupape (18) via un ressort hélicoïdal (47) lorsque le rotor (41) tourne dans un sens de fermeture ; et
une butée (44) qui, lorsque le rotor (41) est à une position de limite de rotation (Rx) où le rotor (41) est davantage tourné dans le sens de fermeture à partir d'une position de fermeture de soupape (Rc) où l'élément de soupape (30) est en contact avec le siège de soupape (18), limite une rotation du rotor (41) dans le sens de fermeture, le procédé comportant de :
(i) appliquer une impulsion (P) à l'entrée du moteur pas à pas (66) pour faire tourner le rotor (41) dans le sens de fermeture avec un premier couple (T1) ;
(ii) lorsqu'un décrochage du moteur pas-à-pas (66) est détecté lors de la rotation du rotor (41) avec le premier couple (T1) (par la suite appelée "première détection de décrochage"), appliquer l'impulsion (P) à l'entrée du moteur pas-à-pas (66) pour faire tourner le rotor (41) dans le sens de fermeture avec un second couple (T2) ; et
(iii) lorsqu'un décrochage du moteur pas-à-pas (66) est détecté lors de la rotation du rotor (41) avec le second couple (T2) (par la suite appelée "seconde détection de décrochage"), obtenir le nombre d'impulsions (un nombre d'impulsions) (Nj) appliquées en entrée entre la première détection de décrochage et la seconde détection de décrochage,
dans lequel le premier couple (T1) est un couple d'une grandeur incapable de faire tourner le rotor (41) dans le sens de fermeture jusqu'à la position de limite de rotation (Rx), avec l'élément de soupape (30) en contact avec le siège de soupape (18), et
dans lequel le second couple (T2) est un couple d'une grandeur capable de faire tourner le rotor (41) dans le sens de fermeture jusqu'à la position de limite de rotation (Rx) tout en comprimant le ressort hélicoïdal (47), avec l'élément de soupape (30) en contact avec le siège de soupape (18).

3. Procédé de commande de la soupape à commande électrique (1) selon la revendication 2, le procédé comportant en outre de :
(iv) calculer des informations sur le nombre d'impulsions en utilisant le nombre d'impulsions,
dans lequel les informations comportent un nombre d'impulsions qui est entré dans le moteur pas à pas (66) pour faire tourner le rotor (41) de la position de limite de rotation (Rx) à une position d'ouverture de soupape (Ro) à laquelle un débit de fluide dans un orifice de soupape (17) enfermé par le siège de soupape (18) est une valeur de consigne.
